# EUROPÄISCHE PATENTSCHRIFT

(11) **EP 2 944 532 B1**
(45) Veröffentlichungstag und Bekanntmachung des Hinweises auf die Patenterteilung: **30.06.2021**
(21) Anmeldenummer: 15165689.9
(22) Anmeldetag: 29.04.2015
(51) Int. Cl.: B60W 50/14, B60K 35/00, B60W 50/00, B60W 30/14, G08G 1/0967, B60W 30/17

(54) **AMPELASSISTENZSYSTEM FÜR EIN FAHRZEUG MIT EINER ANZEIGEEINRICHTUNG**
TRAFFIC LIGHT ASSISTING SYSTEM FOR A VEHICLE WITH A DISPLAY DEVICE
SYSTÈME D'ASSISTANCE DE FEU DE CIRCULATION POUR UN VÉHICULE DOTÉ D'UN DISPOSITIF D'AFFICHAGE

(30) Priorität: 12.05.2014 DE 102014208942; 06.03.2015 DE 102015204122
(43) Veröffentlichungstag der Anmeldung: 18.11.2015
(73) Patentinhaber: Volkswagen Aktiengesellschaft, 38440 Wolfsburg (DE)
(72) Erfinder: Petermann-Stock, Ina, 38448 Wolsburg (DE); Rhede, Johannes, 10557 Berlin (DE); Poppe, Holger Dr., 38114 Braunschweig (DE); Kranke, Florian, 38102 Braunschweig (DE)

(56) Entgegenhaltungen:
- EP-A2- 2 174 833
- DE-A1-102008 019 461
- DE-A1-102008 020 728
- DE-A1-102013 003 565
- US-A1- 2008 030 372

## Beschreibung

Die Erfindung betrifft ein Ampelassistenzsystem für ein Fahrzeug mit einer Anzeigeeinrichtung für den Fahrer des Fahrzeugs und einer Steuereinrichtung, die ausgebildet ist, in Abhängigkeit von Ampelphaseninformationen und Fahrzeuginformationen zumindest ein Anzeigeelement zu erzeugen.

In modernen Fahrzeugen gewinnen Fahrerassistenzsysteme zur Verbesserung der Sicherheit und des Fahrkomforts stetig an Bedeutung. Unter einem Fahrerassistenzsystem wird eine Einrichtung eines Fahrzeugs verstanden, welche den Fahrer beim Fahren des Fahrzeugs unterstützt. Fahrerassistenzsysteme im Sinne der Erfindung umfassen somit sowohl reine Informationssysteme, welche den Fahrer unterstützen, als auch Einrichtungen, welche automatisch die Fortbewegung des Fahrzeugs beeinflussen, wobei sie die Fahrfunktionen des Fahrzeugs regeln können oder in die Fahrfunktionen eingreifen können.

Ohne das Fahrerassistenzsystem beeinflusst der Fahrer direkt die Bewegung des Fahrzeugs. Es werden allenfalls Signale oder Bewegungen von vom Fahrer betätigten Bedienelementen, wie der Pedalerie, dem Schaltknüppel oder dem Lenkrad, an entsprechende Einrichtungen des Fahrzeugs übertragen, welche die Fortbewegung des Fahrzeugs beeinflussen. Eine derartige Fortbewegung des Fahrzeugs entspricht dem geringsten Grad der Automatisierung. Bei einem höheren Grad der Automatisierung wird zum Teil automatisch in Einrichtungen eingegriffen, welche der Fortbewegung des Fahrzeugs dienen. Beispielsweise wird in die Lenkung des Fahrzeugs oder die Beschleunigung in positiver oder negativer Richtung eingegriffen. Bei einem noch höheren Grad der Automatisierung wird soweit in Einrichtungen des Fahrzeugs eingegriffen, dass bestimmte Fortbewegungsarten des Fahrzeugs, z. B. eine Geradeausfahrt, automatisch ausgeführt werden können. Beim höchsten Grad der Automatisierung können etwa Routen eines Navigationssystems im Wesentlichen automatisch gefahren werden.

Im Zuge der Weiterentwicklung von Fahrerassistenzsystemen wird der Einsatzbereich auf urbane Räume ausgedehnt werden, für die komplexere Verkehrssituationen als beispielsweise auf einer Autobahn typisch sind. Ein wesentliches Element der Verkehrsregelung in urbanen Räumen ist die Lichtsignalanlage (LSA) bzw. umgangssprachlich "Ampel". Im Stadtverkehr ist das Fahren zudem durch dichten Verkehr und häufige Stop-and-Go-Situationen gekennzeichnet, in denen Beschleunigen, Verzögern und Anhalten in rascher Folge durchzuführen sind. Insbesondere hier ist eine Übernahme der Längsregelung durch das heute verfügbare Abstandsregelsystem mit Stop-and-Go-Funktion eine erhebliche Erleichterung. Dabei wird die Bewegung des Fahrzeugs teil- oder vollautomatisch durch Beschleunigen oder Verzögern in Fahrtrichtung so gesteuert, dass insbesondere ein ausreichender Abstand zum vorausfahrenden Fahrzeug eingehalten wird. Ferner wird die Geschwindigkeit den äußeren Bedingungen angepasst, um z. B. Verkehrsvorschriften einzuhalten, den Energieverbrauch des Fahrzeugs zu optimieren oder auf herannahende Hindernisse zu reagieren.

Bekannte Assistenzsysteme zur Längsführung von Fahrzeugen berücksichtigen jedoch noch nicht das Element LSA. Der Fahrer muss daher im Umfeld der LSA häufig korrigierend und durch die unbekannten Zeitpunkte des Signalwechsels auch sehr schnell eingreifen. Dies ist unkomfortabel und macht ein vorausschauendes Fahren hinsichtlich Kraftstoff- und Verkehrseffizienz unmöglich. Durch die Berücksichtigung der Signalzustände und der Kenntnis der (zukünftigen) Schaltzeitpunkte einer LSA kann eine signifikante Verbesserung der Assistenz hinsichtlich Fahrkomfort, Energieverbrauch und Stauminderung erreicht werden. Gleichzeitig müssen Eingriffe des Fahrerassistenzsystem für den Fahrer leicht nachvollziehbar sein, damit dieser das Verhalten seines Fahrzeugs einschätzen kann und - etwa bei einer plötzlichen Änderung der Verkehrssituation - selbst korrigierend eingreifen kann.

Bisher sind Anzeigevarianten für Ampelsituationen bekannt, die entweder ein Ampelsymbol mit Restzeitanzeige darstellen oder eine Geschwindigkeitsempfehlung anzeigen, durch die eine möglichst gleichmäßige Fahrt gewährleistet werden soll. Nachteilig bei diesen Systemen ist, dass eine Integration der derzeitigen und zukünftigen Signalzustände in Bezug zur Eigenposition des Fahrzeugs in eine Anzeige für Fahrerassistenzsysteme fehlt.

Das Dokument US 2008 030372 A1 offenbart ein Ampelassistenzsystem für ein Fahrzeug mit einer Anzeigeeinrichtung für den Fahrer des Fahrzeugs und einer Steuereinrichtung, die ausgebildet ist, in Abhängigkeit von Ampelphaseninformationen und Fahrzeuginformationen ein Anzeigeelement zu erzeugen und dieses Anzeigeelement relativ zu einem als Referenzpunkt innerhalb der Anzeige der Anzeigeeinrichtung dienenden Fahrzeugsymbol auf der Anzeigeeinrichtung darzustellen.

Der vorliegenden Erfindung liegt die Aufgabe zugrunde, ein Ampelassistenzsystem zur Verfügung zu stellen, dessen Ausgaben der Fahrer schnell und sicher erfassen kann. Erfindungsgemäß wird diese Aufgabe durch ein Ampelassistenzsystem mit den Merkmalen des Anspruchs 1 gelöst. Vorteilhafte Ausgestaltungen und Weiterbildungen ergeben sich aus den abhängigen Ansprüchen.

Bei dem erfindungsgemäßen Ampelassistenzsystem wird eine Darstellung auf der Anzeigeeinrichtung des Fahrzeugs erzeugt, um Informationen des Ampelassistenzsystems für den Fahrer auszugegeben. Als Referenzpunkt innerhalb der Anzeige dient dabei ein Fahrzeugsymbol, relativ zu dem zumindest ein anderes Anzeigeelement dargestellt wird. Insbesondere wird dieses Anzeigeelement in Abhängigkeit von Informationen über die Ampelphasen und das Fahrzeug erzeugt. Die Ampelphaseninformationen umfassen zum Beispiel insbesondere Daten darüber, zu welchen Zeitpunkten die Ampel schaltet, wann also die Durchfahrt erlaubt oder verboten ist. Anhand der Ampelphaseninformationen kann das Ampelassistenzsystem bestimmen, ob zum gegebenen Zeitpunkt an einer Ampel die Durchfahrt gestattet ist oder in welchen Zeiträumen einzelne Ampeln schalten werden. Die Fahrzeuginformationen können beispielsweise die Position des Fahrzeugs sowie Richtung und Betrag seiner Geschwindigkeit umfassen. Diese Informationen werden insbesondere in Relation zur Ampel erfasst, d.h. es wird etwa der Abstand des Fahrzeugs zur Ampel erfasst. Ferner können die Fahrzeuginformationen Daten zum Beispiel zu einer geplanten Route, zur Verkehrssituation in der Umgebung des Fahrzeugs und auf einer geplanten Route und zu den individuellen Präferenzen des Fahrers umfassen.

Aus der Gesamtheit der vom System erfassten Informationen ergeben sich Maßnahmen des Ampelassistenzsystems, also je nach dem Grad der Automatisierung etwa die Ausgabe von Fahrthinweisen für den Fahrer oder die automatische Durchführung eines Beschleunigungs- bzw. Bremsvorgangs, d.h. eine automatische Längsregelung. Dem Fahrer können bei dem erfindungsgemäßen Ampelassistenzsystem in vorteilhafter Weise Ausgaben des Ampelassistenzsystems schnell und sicher erfassbar ausgegeben werden. Diese Ausgaben können im Falle geringer Automatisierung Fahranweisungen sein, die der Fahrer aktiv mittels der Steuerung des Fahrzeugs umsetzen soll. Bei einem höheren Automatisierungsgrad können die Ausgaben Informationen darüber umfassen, welche Fahrmanöver gerade automatisiert ablaufen. Auf diese Weise ist kann gewährleistet werden, dass der Fahrer auch während eines automatischen Eingriffs in die Steuerung des Fahrzeugs stets den Überblick über das Verhalten des Fahrzeugs behält und gegebenenfalls aktiv eingreifen und korrigieren kann.

Dem Fahrer sind damit sowohl die aktuellen als auch die zukünftigen Systemzustände der Assistenzfunktion jederzeit bewusst und er kann infolgedessen Systemvertrauen aufbauen, das heißt, die Maßnahmen des Ampelassistenzsystems sind für den Fahrer nachvollziehbar. Dies führt auch zu einem höheren Befolgungsgrad, d.h. der Fahrer ist bereit, Fahranweisungen des Systems zu befolgen. Durch die Integration der derzeitigen und zukünftigen Signalzustände der Ampel in Bezug zur Eigenposition des Fahrzeugs in eine integrative Anzeige für Fahrerassistenzsysteme, insbesondere für ein Längsregelsystem des Fahrzeugs, können der Fahrkomfort sowie Verbrauchs- und Verkehrseffizienz verbessert werden.

Unter dem Begriff "Ampel" ist erfindungsgemäß insbesondere eine Lichtsignalanlage zu verstehen, bei der durch Ausgabe eines Lichtsignals Informationen an Verkehrsteilnehmer übermittelt werden. Diese Informationen betreffen beispielsweise die Erlaubnis bzw. das Verbot eine vorgegebene Haltelinie zu überfahren und etwa in eine Kreuzung einzufahren oder geben Vorfahrtsregelungen an einer Kreuzung wieder.

Bei dem erfindungsgemäßen Ampelassistenzsystem wird insbesondere eine Anzeige eines Fahrerassistenzsystems erweitert um Anzeigeelemente für die Überquerung einer Ampel mit entsprechender Assistenzfunktion (Ampelassistenz). Die unten beschriebenen Elemente der Anzeige für die Funktion Ampelassistenz können allerdings auch für eine vergleichbare Funktion mit Handlungsempfehlungen oder zur Rückmeldung eines Systemverhaltens genutzt werden. Beispielsweise können andere Verkehrszeichen zum Anhalten auffordern oder die Verkehrsverhältnisse können einen Eingriff eines Fahrerassistenzsystems auslösen. Im Sinne des vorausschauenden Fahrens, bei dem herannahende Gefahrensituationen antizipiert werden, können solche Situationen analog zu einer vor dem Fahrzeug befindlichen Ampel berücksichtigt werden, etwa durch die Anpassung der Geschwindigkeit durch eine automatische Längsregelung oder durch die Ausgabe eines entsprechenden Fahrhinweises für den Fahrer des Fahrzeugs. Informationen zum Zustand des Fahrzeugs und über Eingriffe des Fahrerassistenzsystems können daher auf analoge Weise durch das erfindungsgemäße System ausgegeben werden.

Die Ampelassistenzfunktion kann in die bestehende Logik einer bereits bekannten, allgemeinen Anzeige für andere Fahrerassistenzsysteme des Fahrzeugs, etwa eine automatische Längsregelung, integriert werden. Die bereits existierende Längsregelung auf Basis der Abstandsregelung wird in diesem Fall durch das erfindungsgemäße Ampelassistenzsystem zur Unterstützung des Fahrers beim vorausschauenden Durchfahren von Kreuzungen mit Lichtsignalanlagen, einschließlich ggf. Halten und Starten, erweitert. Der Funktionsfokus liegt dabei auf allen mit Lichtsignalanlagen oder vergleichbaren Elementen zur Verkehrsregelung ausgestatteten Streckenabschnitten. Es kann etwa eine aktive und permanente Längsregelung im Rahmen der Abstandsregelung (ACC) erfolgen. Die Unterstützung durch das erfindungsgemäße System fokussiert die assistierte Fahrt und dient insofern als unterstützende und erklärende Information. Allerdings können Elemente aus der mittels des erfindungsgemäßen Systems erzeugten Anzeige auch zur Ausgabe einer Fahrempfehlung ohne eine automatische Längsregelung verwendet werden.

Die Anzeigeeinrichtung ist erfindungsgemäß insbesondere im Kombiinstrument des Fahrzeugs integriert. Der Fahrer kann diesen Bereich besonders leicht überwachen und dort dargestellte Informationen schnell erfassen. Ferner kann es sich bei der Anzeigeeinrichtung beispielsweise um eine Sichtfeldanzeige, etwa ein sogenanntes Head-up-Display, oder einen Bildschirm an der Mittelkonsole des Fahrzeugs handeln.

Bei einer Weiterbildung des erfindungsgemäßen Ampelassistenzsystems sind die Ampelphaseninformationen über eine Funkschnittstelle empfangbar und/oder aus einer Datenbank lesbar. Das erfindungsgemäße System nutzt vorteilhafterweise insbesondere Informationen über die in der Zukunft liegenden Schaltzeitpunkte der Ampel. Solche Informationen können über geeignete Kommunikationswege, beispielsweise c2X (Car-to-X) oder Mobilfunk, oder in fahrzeuginternen Datenbanken zur Verfügung gestellt werden. Die automatische Kommunikation mit den Ampeln setzt insbesondere das Bestehen eines geeigneten Kommunikationsnetzes voraus, bei dem beispielsweise einzelne Ampelanlagen Informationen zu den Schaltzeiten übertragen oder die Informationen aus anderen Quellen bezogen werden. Es wird erwartet, dass solche Kommunikationsnetze in Zukunft verstärkt zur Verfügung stehen werden, um eine verbesserte Regelung des Verkehrt, vor allem innerhalb von Städten, zu erreichen.

Da in dieser Ausführung die zukünftige Schaltung von vor dem Fahrzeug liegenden Ampeln im Voraus bekannt ist, deckt der Aktionsraum des erfindungsgemäßen Ampelassistenzsystem einen längeren Streckenabschnitt vor der eigentlichen Ampel und der zugeordneten Haltelinie sowie einen kürzeren Bereich dahinter ab. Auf Basis der erkannten Situation wird ein Regime zugeordnet und damit ein geeignetes, vorausschauendes Fahrmanöver ausgewählt. Als "Regime" werden hierbei insbesondere grundlegende Fahrsituationen danach unterschieden, ob ein Anhalten des Fahrzeugs nötig ist oder ob die Fahrt ohne Halt fortgesetzt werden kann. Eine relevante Situationen ist z. B. eine verzögerte Durchfahrt bei zunächst rotem Signal zum individuellen Einordnen in der "grünen Welle". Das Fahrzeug wird in diesem Fall beim Zufahren auf ein Haltesignal so verzögert, dass es die Haltelinie erst erreicht, wenn die Durchfahrt wieder gestattet ist. Beim Weiterfahren kann die Geschwindigkeit des Fahrzeugs so gesteuert werden, dass kein Halten an vorausliegenden Ampeln erforderlich ist, wenn eine solche optimale Geschwindigkeit ("grüne Welle") vorgesehen ist. Eine weitere beispielhafte Situation ist der unvermeidliche Halt bei rotem Signal und ein nachfolgend optimierter Start. Dabei hält das Fahrzeug in einem bestimmten Abstand vor der Haltelinie, um dann etwa bereits vor dem Umschalten des Lichtsignals so zu beschleunigen, dass die Haltelinie direkt nach dem Zeitpunkt des Umschalten überfahren wird.

Bei einer weiteren Ausführung ist die Erfassung der IST-Zustandsdaten, das heißt des aktuellen Signals, der Ampel auf Basis einer sensorbasierten (z.B. Kamera) Detektion implementiert. In diesem Fall detektiert ein Sensor des Fahrzeugs den aktuellen Schaltzustand einer Ampel, etwa an einer vor dem Fahrzeug liegenden Kreuzung, und führt eine Assistenzfunktion anhand dieser Daten durch, etwa durch Anzeige einer Warnmeldung oder automatisches Abbremsen und Beschleunigen des Fahrzeugs.

Bei einer Weiterbildung der Erfindung umfassen die Fahrzeuginformationen einen Abstand zwischen dem Fahrzeug und der nächsten Ampel in Fahrtrichtung, eine Fahrzeugbeschleunigung und/oder eine Annäherungsgeschwindigkeit des Fahrzeugs an die Ampel. Es werden daher vorteilhafterweise Informationen erfasst, die dem Ampelassistenzsystem erlauben, die Längsführung des Fahrzeugs zu optimieren und die Ausgabe von Warnmeldungen oder automatische Eingriffe, insbesondere eine automatische Längsregelung, durchzuführen.

In einer Ausbildung des erfindungsgemäßen Ampelassistenzsystems umfassen die Fahrzeuginformationen Regelparameter eines Längsregelsystems. Diese Regelparameter können insbesondere der Soll-Abstand zu vorausfahrenden Fahrzeugen, eine Änderung der Geschwindigkeit des Fahrzeugs oder andere geplante Eingriffe des Längsregelsystems sein. Das System wird dadurch vorteilhafterweise mit anderen Funktionen und Fahrerassistenzsystemen des Fahrzeugs verknüpft und die Ausgabe kann innerhalb einer Anzeige von Regelparametern für den Fahrer integriert werden. Das Längsregelsystem führt insbesondere die Steuerung der Geschwindigkeit so aus, dass der Sicherheitsabstand zu einem vorausfahrenden Fahrzeug gewahrt wird. Dies wird vom Ampelassistenzsystem berücksichtigt, das heißt beispielsweise, dass Beschleunigungsvorgänge so gestaltet werden, dass der Sicherheitsabstand weiter eingehalten wird. Die Anzeige kann daher sowohl Informationen zur Ampelassistenzfunktion, als auch zur weiteren Längsregelung umfassen.

In einer weiteren Ausbildung des erfindungsgemäßen Ampelassistenzsystems sind die Regelparameter in Abhängigkeit von den Ampelphaseninformationen gebildet. Dabei werden die Regelparameter des Längsregelsystems anhand der Informationen gebildet, die das erfindungsgemäße Ampelassistenzsystem erfasst. Dadurch wird der Fahrer in vorteilhafter Weise bei der Steuerung des Fahrzeugs entlastet, insbesondere bei der vorausschauenden Anpassung der Geschwindigkeit an die Verkehrssituation. Insbesondere kann das Ampelassistenzsystem auf diese Weise zur automatischen Steuerung des Fahrzeugs verwendet werden.

Bei einer Ausgestaltung ist das Längsregelsystem ausgebildet, Regelparameter zur Beschleunigung oder Verzögerung des Fahrzeugs so zu erzeugen, dass die Bewegung des Fahrzeugs vor einer Ampel in Bezug auf die Fahreffizienz optimiert wird. Der Fahrer wird so vorteilhafterweise bei der Führung des Fahrzeugs unterstützt. Der Begriff "Fahreffizienz" fasst erfindungsgemäß verschiedene, teilweise voneinander abhängige Größen zusammen, nach denen die Effizienz der Fahrt beurteilt wird. Zu diesen Größen gehören etwa der Energieverbrauch des Fahrzeugs, die Reisezeit zum Erreichen eines Zielorts und/oder die Eingliederung in den Verkehrsfluss. Abhängig von der Verkehrssituation kann es beispielsweise nötig sein, zur Verkürzung der Reisezeit viele starke Beschleunigungen durchzuführen, was wiederum einen höhere Energieverbrauch des Fahrzeug zur Folge hat. Umgekehrt kann die Reisezeit länger dauern, wenn ein möglichst geringer Energieverbrauch erreicht werden soll. Um ein geeignetes Fahrverhalten zu ermitteln, löst das Längsregelsystem also eine Optimierungsaufgabe, bei der die unterschiedlichen Auswirkungen eines Fahrmanövers analysiert und gewichtet werden. Die Regelparameter werden dann so erzeugt, dass die Fahrt des Fahrzeugs dem Optimum der Fahreffizienz entspricht.

Gemäß der vorliegenden Erfindung ist das Anzeigeelement als Pfeil variabler Länge ausgestaltet und in Fahrtrichtung vor dem Fahrzeugsymbol angeordnet. Durch die Darstellung eines Pfeils als verbreitetem Richtungssymbol wird dem Fahrer vorteilhafterweise schnell erfassbar signalisiert, dass die angezeigten Daten die Bewegung des Fahrzeugs in Fahrtrichtung, also etwa eine Längsregelung betreffen.

Gemäß der vorliegenden Erfindung ist die Länge des Pfeils abhängig von der Beschleunigung oder Verzögerung des Fahrzeugs. Hierdurch wird die Darstellung so erzeugt, dass Informationen über die Änderung der Bewegung des Fahrzeugs in Fahrtrichtung dem Fahrer schnell erfassbar angezeigt werden.

Ferner ist gemäß der vorliegenden Erfindung die Länge des Pfeils abhängig von dem Betrag und/oder der Richtung der Beschleunigung oder Verzögerung des Fahrzeugs. Der Fahrer erkennt dadurch, wie und in welchem Maße die Geschwindigkeit des Fahrzeugs durch den automatischen Eingriff der Längsregelung beeinflusst wird. Dabei kann sowohl das aktuelle Systemverhalten dargestellt werden, das heißt zum Beispiel eine gerade durchgeführte Verzögerung, als auch das für die Zukunft geplante Verhalten, etwa eine bevorstehende Beschleunigung. Insbesondere wird der dargestellte Pfeil länger mit wachsendem Betrag der Beschleunigung in Fahrtrichtung und kürzer mit stärkerer Verzögerung.

In einer weiteren Ausführung umfasst der Pfeil ein Fischgrätenmuster, das abhängig davon gestaltet ist, ob ein aktiviertes Längsregelsystem das Fahrzeug beschleunigt, verzögert oder bis zum Stillstand verzögert und/oder ob das Fahrzeug bis zum Erreichen der nächsten Ampel in Fahrtrichtung beschleunigen, verzögern oder bis zum Stillstand vor der Ampel verzögern wird. Durch die Integration einer in anderen Bereichen verbreiteten Symbolik (Fischgrätenmuster) für Beschleunigungs- und Verzögerungsvorgänge auf dem Längsführungspfeil wird dem Fahrer redundante Information über das aktuelle bzw. zukünftige Systemverhalten angezeigt, insbesondere wenn dem Fahrer die Information gleichzeitig an verschiedenen Ausgabeeinheiten im Fahrzeug angezeigt wird. Je nach dem Eingriff des Längsregelsystems in die Fahrt des Fahrzeugs wird die Darstellung des Fischgrätenmusters so angepasst, dass dem Fahrer zusätzliche Informationen dargestellt werden. Dadurch wird die Anzeige in vorteilhafter Weise differenziert, sodass der Fahrer verschiedene Eingriffe des Assistenzsystems unterscheiden und deren Konsequenzen abschätzen kann. Insbesondere können Beschleunigung, Verzögerung und das bevorstehende Anhalten des Fahrzeugs angezeigt werden. Anpassbare Eigenschaften des Fischgrätenmusters können etwa die Anzahl, Dicke und Breite der dargestellten Pfeilelemente sowie die von ihnen angezeigte Richtung sein. Bei einer starken Beschleunigung können beispielsweise viele nach vorne weisende Pfeilelemente angezeigt werden, während eine geringere Zahl von "Gräten" eine geringere Beschleunigung signalisiert.

Ferner können andere Symbole verwendet werden, um die oben beschriebene Funktion des Fischgrätenmusters zu erfüllen. Insbesondere können andere geometrische Formen dargestellt werden, die eine Richtung auszeichnen, etwa Dreiecke oder Pfeilköpfe.

Die Integration nutzerseitig benötigter Informationen zum Verständnis der Längsdynamik, insbesondere der ACC-Regelung, unterstützt den Fahrer dabei zu erkennen, mit welchem Verhalten des Fahrzeugs er rechnen muss und wo er nötigenfalls aktiv einzugreifen muss. Die Anpassung der Länge des Längsführungspfeils entsprechend des Längsregelsystems bietet redundante Information über das aktuelle bzw. zukünftige Systemverhalten, insbesondere wenn dem Fahrer die Information während eines aktuell ausgeführten Eingriffs gleichzeitig an verschiedenen Ausgabeeinheiten im Fahrzeug angezeigt wird und der Fahrer eine aktuell durchgeführte Geschwindigkeitsänderung haptisch wahrnimmt.

Bei einer Ausgestaltung der Erfindung ist die Steuereinrichtung ausgebildet, mehrere Anzeigeelemente relativ zu dem Fahrzeugsymbol auf der Anzeigeeinrichtung darzustellen, wobei die verschiedenen Anzeigeelemente unterschiedlichen Fahrstreifen und/oder unterschiedlichen Ampeln zugeordnet sind. Dadurch können vorteilhafterweise komplexere Verkehrssituationen umfassend dargestellt werden, wenn beispielsweise mehreren Fahrstreifen jeweils eigene Ampeln zugeordnet sind. Die dargestellte Anzeige setzt eine eindeutige Zuordnung von Fahrzeug und Signalgruppe, etwa eine Ampel, voraus. Ferner können etwa Fahrhinweise für verschieden stark befahrene Fahrstreifen dargestellt werden, auf denen unterschiedliche Eingriffe des Fahrerassistenzsystems notwendig sind, um etwa den Sicherheitsabstand zum vorausfahrenden Fahrzeug zu wahren, obwohl auf allen Fahrstreifen die Signale der gleichen Ampel berücksichtigt werden müssen. Umgekehrt können mehrere Ampeln etwa für verschiedene Richtungen vorhanden sein. In diesen Fällen erzeugt die Steuereinrichtung die Darstellung so, dass mehrere Anzeigeelemente das geplante Verhalten des Fahrzeugs in mehreren alternativen Fahrsituationen darstellen. Ferner kann, um diese Zuordnung zu ermöglichen, etwa ein Abbiegepfeil angezeigt werden, der signalisiert, dass sich die Anzeige auf die entsprechende Abbiegespur bezieht.

Beispielsweise kann die Darstellung als Graphikelemente mehrere Pfeile nebeneinander umfassen und Fahrhinweise für verschiedene Fahrstreifen anzeigen, beispielsweise einen geplanten Beschleunigungsvorgang auf dem aktuellen Fahrstreifen, dessen Ampel die Fahrt freigibt, und einen Bremsvorgang auf dem Nachbarfahrstreifen, dessen Ampel den Fahrer zum Halten auffordert. Die Anzeige verschiedener Signalgruppen trägt zur effizienten Steuerung des Verkehrsflusses bei und unterstützt den Fahrer bei der Auswahl einer präferierten oder priorisierten Ampel bzw. des Fahrstreifens.

In einer weiteren Ausbildung ist die Steuereinrichtung ausgebildet, ferner ein Halteliniensymbol relativ zu dem Fahrzeugsymbol auf der Anzeigeeinrichtung darzustellen. Dies erfolgt durch die Integration einer Logik zur bedarfsgerechten Anzeige von Haltelinien, d.h. zur Erzeugung einer Darstellung von Haltelinien durch die Steuereinrichtung. Dieses Symbol wird insbesondere in Situationen angezeigt, in denen das Fahrzeug zum Stillstand gebracht werden soll oder vor einer Ampel steht. Es kann in vorteilhafter Weise dem Fahrer eine aktuell durchgeführte oder geplante Bremsung, womöglich bis zum Stillstand des Fahrzeugs, verdeutlichen oder darauf hinweisen, dass nach der Freigabe der Fahrt durch die Ampel eine Beschleunigung nötig sein wird, um die angestrebte Geschwindigkeit des Fahrzeugs zu erreichen. Ferner kann der Abstand der Halteposition des Fahrzeugs von der Haltelinie signalisiert werden. Die Darstellung kann mehrere Haltelinien umfassen, beispielsweise um Fahrhinweise für mehrere Fahrstreifen anzuzeigen.

Eine Weiterbildung der Erfindung umfasst die Kombination einer bedarfsgerechten Anzeige von Haltelinien mit Informationen über verschiedene Phasen der Durchfahrt im Ampelbereich. Die Eigenschaften der angezeigten Haltelinien werden dazu der Position des Fahrzeugs relativ zur Ampel angepasst. Beispielsweise kann farblich unterschieden werden (Farbbalken), ob das Fahrzeug zum Halt gebracht werden muss oder ob die Haltelinie überfahren werden kann.

In einer weiteren Ausführung erzeugt die Steuereinrichtung die Darstellung so, dass verschieden dargestellte und voneinander abgegrenzte Flächen verschiedene Phasen der Durchfahrt im Ampelbereich anzeigen. Dazu werden die Schaltzeitpunkte der Ampel in Bezug zur Eigenposition und zur Geschwindigkeit des Fahrzeugs gesetzt. Insbesondere sind diese Flächen in verschiedenen Farben dargestellt und werden daher im folgenden "Farbteppich" genannt, allerdings kann die Unterscheidung auch durch andere Merkmale, etwa verschiedene Muster erfolgen. Der Farbteppich kann relativ zum Fahrzeugsymbol so angezeigt werden, dass er in der Darstellung einer in Fahrtrichtung verlaufenden Fahrbahn entspricht. Beispielsweise kann durch die Darstellung des vor dem Fahrzeug liegenden Fahrstreifens in roter Farbe angezeigt werden, dass die vor dem Fahrzeug befindliche Ampel ein Haltsignal zeigt und eine Verzögerung erfolgen soll. Umgekehrt kann grüne Farbe signalisieren, dass die Fahrt freigegeben ist und eine Beschleunigung durchgeführt werden soll. Durch die Anzeige kann dem Fahrer signalisiert werden, dass sich das Fahrzeug bei der aktuellen Geschwindigkeit im "grünen" oder im "roten" Bereich befindet, d.h. ob eine unterbrechungsfreie Fahrt durchgeführt werden kann oder ob eine Bremsung bis zum Stillstand des Fahrzeugs nötig ist. Die Kombination beider Merkmale, etwa die Darstellung eines Fahrstreifens mit roten und grünen Bereichen, erlaubt die Darstellung komplexerer Fahranweisungen, um beispielsweise das Fahrzeug beim Zufahren auf eine rote Ampel abzubremsen, ohne dabei zum Halt zu kommen, und die Haltelinie erst nach der Freigabe durch die Ampel zu überfahren.

In einer Weiterbildung umfasst das Ampelassistenzsystem einen Wartemodus, der aktiviert wird, wenn das Fahrzeug an einer Ampel zum Halten kommt, wobei die Anzeige ein weiteres Element umfasst, das Informationen über den Status des Ampelassistenzsystems anzeigt. Dies kann beispielsweise erfolgen durch die Integration eines Wartemodus mit folgenden Bestandteilen: Eine Anzeige der verbleibenden Wartezeit (Dauer der Rotlichtphase), etwa eine dynamische Darstellung der sich mit der Zeit verringernden Anzahl der Sekunden bis zum Schalten der Ampel (Counter), sowie eine Anforderung einer Fahrerbestätigung (Handlungsaufforderung) für einen effizienten bzw. optimierten Start, wobei insbesondere eine Meldung angezeigt wird, dass das Assistenzsystem einen automatischen Start des Fahrzeugs durchführen kann, wenn der Fahrer diese Intention durch eine Bedienhandlung bestätigt. Ferner kann eine Anzeige der Wartezeit bis zum optimierten Start angezeigt werden, falls der Fahrer bestätigt hat, dass ein optimierter Start durchgeführt werden soll. Zum Durchführen eines optimierten Starts wird das Fahrzeug zunächst in einem bestimmten Abstand vor der Haltelinie zum Stehen gebracht und bereits vor dem Schalten der Ampel wieder beschleunigt, um gleich nach dem Schalten der Ampel die Haltelinie zu überfahren.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Ampelassistenzsystems,
- Figur 2: zeigt eine Anzeige, die von einem Ausführungsbeispiel des erfindungsgemäßen Ampelassistenzsystems erzeugt wird,
- Figuren 3A bis 3D: zeigen Beispiele für die Längsregelung bei Annäherung an eine Ampel,
- Figuren 4A und 4B: zeigen Anzeigen, die von einem Ausführungsbeispiel des erfindungsgemäßen Ampelassistenzsystems bei einer Beschleunigung und Verzögerung des Fahrzeugs erzeugt werden,
- Figuren 5A bis 5C: zeigen Anzeigen mit einem Fischgrätenmuster, die von einem Ausführungsbeispiel des erfindungsgemäßen Ampelassistenzsystems erzeugt werden,
- Figuren 6A bis 6C: zeigen Anzeigen mit unterschiedlich gefärbten Bereichen auf der virtuellen Fahrbahn, die von einem Ausführungsbeispiel des erfindungsgemäßen Ampelassistenzsystems erzeugt werden,
- Figuren 7A bis 7F: zeigen eine Abfolge von Anzeigen zur verzögerten Durchfahrt an einer Ampel, die von einem Ausführungsbeispiel des erfindungsgemäßen Ampelassistenzsystems erzeugt werden,
- Figuren 8A bis 8E: zeigen eine Abfolge von Anzeigen zum Halt vor einer Ampel, die von einem Ausführungsbeispiel des erfindungsgemäßen Ampelassistenzsystems erzeugt werden,
- Figuren 9A bis 9G: zeigen eine Abfolge von Anzeigen bei der Durchführung eines optimierten Startvorgangs nach dem Halt an einer Ampel, die von einem Ausführungsbeispiel des erfindungsgemäßen Ampelassistenzsystems erzeugt werden, und
- Figuren 10A bis 10 F: zeigen Anzeigen zur Zuordnung mehrerer Fahrstreifen und Ampeln, die von einem Ausführungsbeispiel des erfindungsgemäßen Ampelassistenzsystems erzeugt werden.

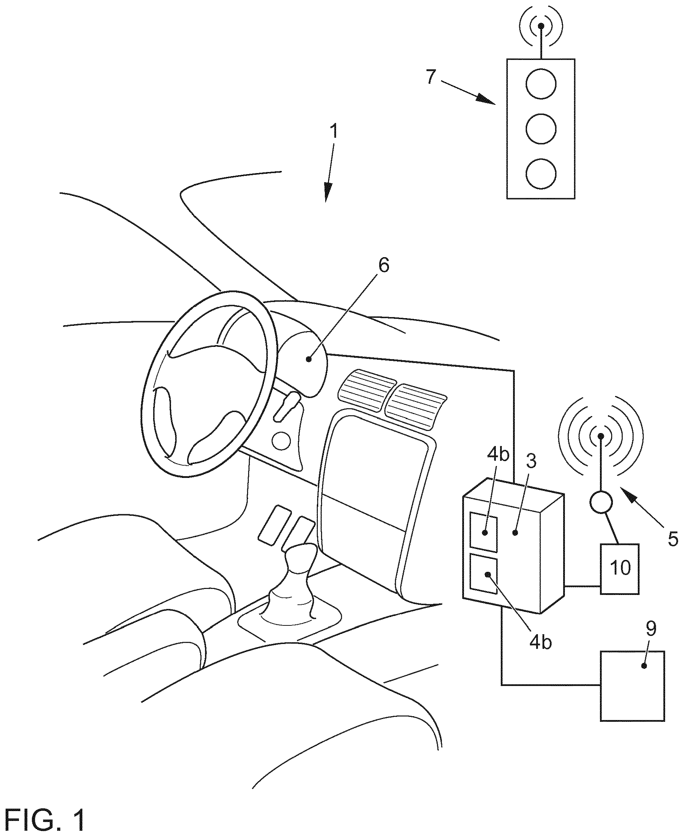

Mit Bezug zu Fig. 1 wird ein Fahrzeug mit einem Ausführungsbeispiel des erfindungsgemäßen Ampelassistenzsystems erläutert.

Das Fahrzeug 1 umfasst eine Anzeigeeinrichtung 6, die im dargestellten Fall im Kombiinstrument 6 integriert ist. Mit diesem ist eine Steuereinrichtung 3 datentechnisch gekoppelt. Durch die Steuereinrichtung 3 werden Graphikdaten erzeugt, an die Ausgabeeinheit 6 übertragen und dort ausgegeben. Die Steuereinrichtung 3 umfasst eine Ampelassistenzeinrichtung 4a und ein Längsregelsystem 4b. Die Steuereinrichtung 3 ist ferner mit einer Antriebseinheit 9 des Fahrzeugs 1 gekoppelt und kann den Antrieb des Fahrzeugs 1 automatisch regeln, indem es Signale erzeugt und an die Antriebseinheit 9 überträgt, sodass beispielsweise eine Beschleunigung oder eine Verzögerung des Fahrzeugs 1 durchgeführt wird.

Ferner ist die Steuereinrichtung 3 mit einer Erfassungseinheit 10 gekoppelt, die wiederum eine Kommunikationseinrichtung 5 umfasst, die drahtlos mit einer Ampel 7 kommunizieren kann. Insbesondere kann die Erfassungseinheit 10 auf diesem Wege Informationen zu den Schaltzeiten der Ampel 7 erfassen. Ferner erfasst die Erfassungseinheit 10 Informationen zum Fahrzeug 1, insbesondere seine Position relativ zur Ampel 7 und seine Geschwindigkeit v₁, sowie den Abstand zu einem vorausfahrenden Fahrzeug, sofern sich ein solches Fahrzeug vor dem Fahrzeug 1 befindet.

Im dargestellten Fall umfasst das Fahrzeug 1 eine automatische Steuerung der Bewegung des Fahrzeugs 1, wobei die Steuereinrichtung 3 bei einem automatischen Eingriff in die Steuerung des Fahrzeugs 1 eine Anzeige auf der Anzeigeeinrichtung 6 erzeugt, durch die dem Fahrer Informationen über den automatischen Eingriff ausgegeben werden. Beispielsweise wird eine Warnmeldung ausgegeben, wenn der Abstand zum vorausfahrenden Fahrzeug zu gering ist und eine Bremsung ausgeführt wird. Insbesondere wird die Längssteuerung automatisch geregelt, wobei die Geschwindigkeit v₁ des Fahrzeugs 1 geregelt wird.

In einer weiteren Ausführung der Erfindung wird der Fahrer des Fahrzeugs 1 lediglich durch Fahrhinweise unterstützt, die mittels der Anzeigeeinrichtung 6 angezeigt werden.

Die Steuereinrichtung 3 erfasst mittels der Erfassungseinheit 10 und deren Kommunikationseinrichtung 5 Ampelphaseninformationen der Ampel 7 und Fahrzeugdaten des Fahrzeugs 1, insbesondere die Geschwindigkeit v₁ des Fahrzeugs 1 und seine Position relativ zur Ampel 7. Ferner werden vorausfahrende Fahrzeuge und der Abstand zu ihnen erfasst. Die Steuereinrichtung 3 bestimmt in Abhängigkeit von diesen Daten eine Fahranweisung, wobei die Ampelassistenzeinrichtung 4a und das Längsregelsystem 4b als Module in ein gesamtes Fahrerassistenzsystem integriert sind.

Die Fahranweisung wird so erzeugt, dass das Fahrzeug 1 den Sicherheitsabstand zu einem vorausfahrenden Fahrzeug einhält, sofern ein solches Fahrzeug erfasst wird. Ferner wird die Geschwindigkeit v₁ des Fahrzeugs 1 in Abhängigkeit von den Schaltzeiten der Ampel 7 so geregelt, dass ein möglichst effizientes Fahrverhalten erreicht wird. Die Fahreffizienz wird dabei anhand von Parametern berechnet, die sich aus den Konsequenzen der jeweils möglichen Fahranweisungen ergeben. Insbesondere wird der Energieverbrauch des Fahrzeugs 1 bestimmt, ferner wird die Reisezeit bis zum Ziel der in einem Navigationssystem des Fahrzeugs 1 erfassten Route bestimmt. Ferner soll das Fahrzeugs 1 so gesteuert werden, dass ein gleichmäßiger Verkehrsfluss ermöglicht wird.

Anhand der so erzeugten Fahranweisung erzeugt die Steuereinrichtung 3 ein Signal und überträgt es an die Antriebseinheit 9, die einen entsprechenden Eingriff in den Antrieb des Fahrzeugs 1 vornimmt. Das Fahrzeug 1 wird in der Konsequenz insbesondere beschleunigt oder verzögert. Ferner erzeugt die Steuereinrichtung 3 Graphikdaten und überträgt diese an die Anzeigeeinrichtung 6, wo die Graphikdaten ausgegeben werden.

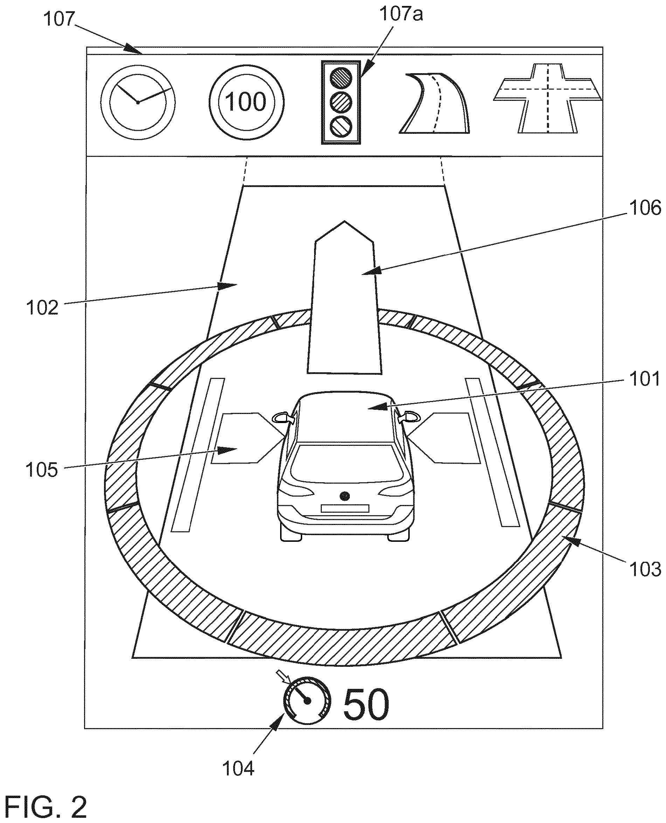

Mit Bezug zu Fig. 2 wird eine Anzeige des erfindungsgemäßen Ampelassistenzsystems erläutert.

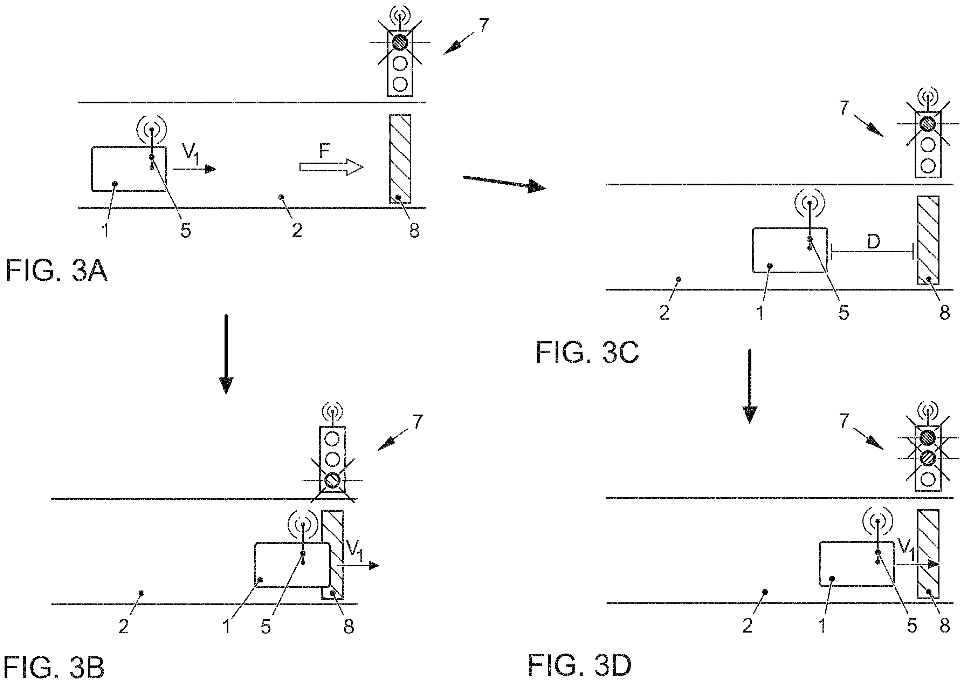

Die Anzeige umfasst ein Fahrzeugsymbol 101, das auf einer virtuellen Fahrbahn 102 dargestellt wird. In Fahrtrichtung vor dem Fahrzeugsymbol 101 befindet sich ein Pfeil 106. Das Fahrzeugsymbol 101 ist umgeben von einem Warnring 103, der gleichmäßig in acht Segmente geteilt ist und an dem eine Richtung angezeigt werden kann, aus der potenzielle Gefahren drohen. Beispielsweise kann die Unterschreitung des Sicherheitsabstands zu einem weiteren Fahrzeug in der Umgebung des Fahrzeugs 1 durch Hervorheben eines der Segmente des Warnrings 103 angezeigt werden, um dem Fahrer zu signalisieren, welchen Gefahrenbereich er überwachen muss. Ferner umfasst die Darstellung eine Querführungsanzeige 105, wobei rechts und links neben dem Fahrzeugsymbol 101 auf der virtuellen Fahrbahn 102 Pfeilsymbole dargestellt werden können, die etwa bei einer Annäherung des Fahrzeugs 1 an den Fahrstreifenrand aufleuchten können und die Führung des Fahrzeugs 1 innerhalb des Fahrstreifens 2 unterstützen (siehe Fig. 3). Im unteren Bereich der Darstellung befindet sich eine Anzeige der Sollgeschwindigkeit 104. Das Längsregelsystem 4b regelt die Geschwindigkeit des Fahrzeugs 1 so, dass die Sollgeschwindigkeit 104 erreicht wird, wenn dies gefahrlos möglich ist, solange also z. B. der Sicherheitsabstand zu vorausfahrenden Fahrzeugen eingehalten wird.

Ferner werden im oberen Bereich der Anzeige Regelobjekte 107 dargestellt, wobei im dargestellten Beispiel ein Ampelsymbol 107a hervorgehoben ist, um zu signalisieren, dass die Ampelassistenzeinrichtung 4a aktiv ist. Ferner werden andere Symbole von Regelobjekten 107 dargestellt, wobei die dazugehörige Regelung inaktiv ist und die Symbole daher "ausgegraut", d.h. mit geringerer Intensität und geringerer Sättigung, dargestellt sind. Diese anderen Symbole von Regelobjekten 107 umfassen etwa Symbole zur Routenführung und zur automatisierten Geradeausfahrt.

Der dargestellte Pfeil 106 wird insbesondere in Abhängigkeit von Ampelphaseninformationen und Fahrzeuginformationen erzeugt. Dies wird unten näher erläutert.

Mit Bezug zu den Figuren 3A bis 3D werden Beispiele für die Längsregelung bei Annäherung an eine Ampel erläutert.

Figur 3A zeigt schematisch das Fahrzeug 1, welches die Kommunikationseinrichtung 5 umfasst und sich auf der Fahrspur 2 befindet. Das Fahrzeug 1 bewegt sich mit der Geschwindigkeit v₁ in Fahrtrichtung F auf die Haltelinie 8 zu. Die Ampel 7 zeigt durch ein rotes Lichtsignal an, dass das Überfahren der Haltelinie 8 nicht zulässig ist. Mittels einer Funkverbindung zwischen der Ampel 7 und der Kommunikationseinrichtung 5 ruft das Fahrzeug 1 Ampelphaseninformationen von der Ampel 7 ab. Anhand dieser Informationen und anhand von Fahrzeuginformationen, etwa der Geschwindigkeit v₁ des Fahrzeugs 1 und des Abstands zur Haltelinie 8, wird ermittelt, ob das Fahrzeug vor der Haltelinie 8 anhalten muss oder ob eine Durchfahrt ohne Halt erfolgen kann.

Bei dem in Figur 3B dargestellten Fall wurde die Geschwindigkeit v₁ des Fahrzeugs 1 so verringert, dass das Fahrzeug 1 die Haltelinie 8 erst erreicht, nachdem die Ampel 7 auf grün geschaltet hat und die Fahrt freigegeben ist.

Bei dem in Figur 3C dargestellten Fall dagegen muss das Fahrzeug 1 vor der Haltelinie 8 zum Stehen gebracht werden. Um ein optimiertes Starten des Fahrzeugs 1 zu ermöglichen, hält das Fahrzeug 1 im Abstand D vor der Haltelinie 8 an. Beim optimierten Start fährt das Fahrzeug 1, wie in Figur 3D dargestellt, bereits los, bevor die Ampel 7 auf grün geschaltet hat. Dies erfolgt so, dass das Fahrzeug 1 die Haltelinie 8 genau dann passiert, wenn die Ampel 7 auf grün schaltet und die Durchfahrt freigibt.

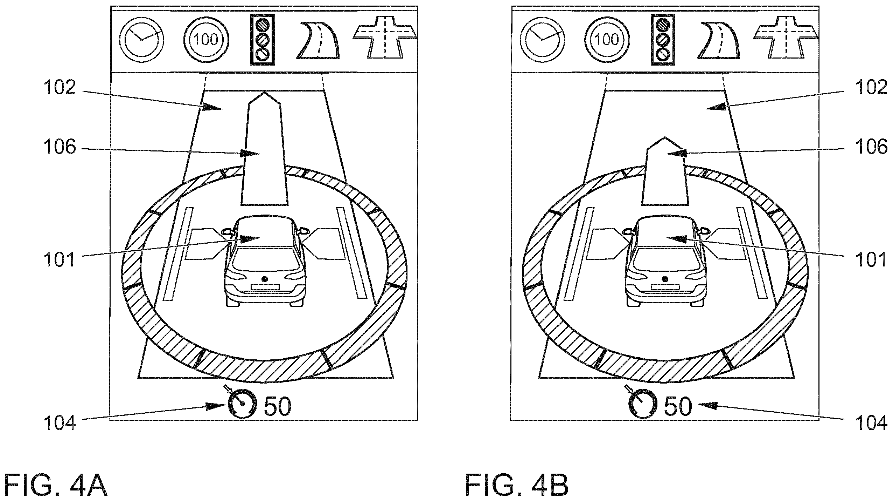

Mit Bezug zu den Figuren 4A und 4B werden Anzeigen erläutert, die von einem Ausführungsbeispiel des erfindungsgemäßen Ampelassistenzsystems bei einer Beschleunigung und Verzögerung des Fahrzeugs erzeugt werden.

Die in den Figuren 4A und 4B dargestellten Anzeigen können zum Beispiel erzeugt werden, um eine Beschleunigung beim Losfahren an einer Ampel 7 anzuzeigen, wie in Figur 3D dargestellt, oder um eine Verzögerung anzuzeigen, wie sie in der in Figur 3A dargestellten Situation durchgeführt wird.

Die Darstellung entspricht im Wesentlichen der in Fig. 2 bereits gezeigten Anzeige. Insbesondere der Pfeil 106 wird im Rahmen des erfindungsgemäßen Ampelassistenzsystems erzeugt und an die Fahrsituation angepasst. Dabei integriert die Darstellung Ausgaben des Ampelassistenzsystems und der Längsführung basierend auf dem Abstand von vorausfahrenden Fahrzeugen.

Der vor dem Fahrzeugsymbol 101 angezeigte Pfeil 106 erlaubt die Darstellung von Maßnahmen zur Steuerung der Längsführung des Fahrzeugs 1. Insbesondere werden Geschwindigkeitsänderungen anhand der Länge des Pfeils 106 dargestellt. Es erfolgt also eine Anpassung der Länge des Längsführungspfeils 106 gemäß dem Regelverhalten des Längsregelsystems 4b. Ein längerer Pfeil 106 bedeutet dabei, dass das Fahrzeug 1 beschleunigt wird, ein kürzerer Pfeil 106 weist auf eine Verzögerung hin. Im zweiten Fall erfolgt zudem eine Unterscheidung für den Anwendungsfall "Halt", bei dem das Fahrzeug 1 am Ende des Bremsvorgangs zum Stehen kommt. Hier wird graphisch der kürzeste Pfeil 106 angezeigt, der zudem mit einem zusätzlichen Halteliniensymbol 108 kombiniert wird. Die Länge des Längsführungspfeils 106 ist somit eine redundante Information für den Fahrer über das Regelungsverhalten des Längsregelsystems 4b und steht in Redundanz zum wahrgenommenen Fahrverhalten (z.B. Beschleunigung des Fahrzeugs 1).

Der in der Figur 4A dargestellte Pfeil 106 vor dem Fahrzeug ist länger als die definierte Ausgangslänge, wie sie in Fig. 2 dargestellt ist. Der Pfeil 106 reicht in Fig. 4A fast bis zum Ende des dargestellten Abschnitts der virtuellen Fahrbahn 102 und signalisiert daher dem Fahrer des Fahrzeugs 1, dass das Längsregelsystem 4b eine Beschleunigung ausführt.

Der in Figur 4B gezeigte Pfeil 106 ist dagegen kürzer als die Ausgangslänge und weist damit auf eine Verzögerung hin. Ein besonders kurzer Pfeil kann zudem signalisieren, dass das Fahrzeug 1 zum Stehen gebracht wird.

Die Anzeige kann dynamisch erzeugt werden, insbesondere kann sich die Länge des Pfeils 106 über die Zeit ändern oder ein sich periodisch verlängernder oder verkürzender Pfeil 106 kann dem Fahrer eine Beschleunigung bzw. eine Verzögerung des Fahrzeugs 1 mit zusätzlicher Deutlichkeit signalisieren.

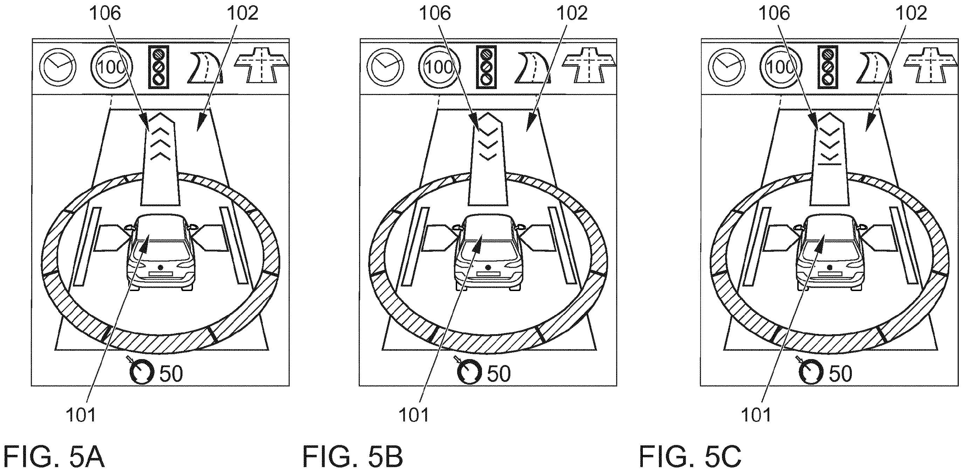

Mit Bezug zu den Figuren 5A bis 5C werden Anzeigen mit einem Fischgrätenmuster erläutert, die von einem Ausführungsbeispiel des erfindungsgemäßen Ampelassistenzsystems erzeugt werden.

Wie bereits oben beschrieben, wird das Fahrzeugsymbol 101 auf der virtuellen Fahrspur 102 dargestellt. Vor dem Fahrzeugsymbol 101 befindet sich der in Fahrtrichtung weisende Pfeil 106. In den Pfeil 106 für die Längsregelung wurde eine Darstellung integriert, welche die Form eines Fischgrätenmusters hat und den Fahrer über die geplanten Beschleunigungen und Verzögerungen des Längsregelsystems 4b informiert. Dieses Fischgrätenmuster bildet drei unterschiedliche Systemzustände für die abstandsbasierte Längsregelung ab: Beschleunigung, Verzögerung und Verzögerung auf Halt (Stillstand). Das Fischgrätenmuster ist somit eine zusätzliche Information für den Fahrer über das Regelungsverhalten des Längsregelsystems 4b und steht in Redundanz zum wahrgenommenen Fahrverhalten (z.B. Beschleunigung des Fahrzeugs 1).

Bei dem in Figur 5A dargestellten Fall wird eine Beschleunigung des Fahrzeugs 1 angezeigt, beispielsweise in der in Figur 3D dargestellten Situation des Anfahrens an einer Ampel 7. Dies wird durch ein in Fahrtrichtung nach vorne weisendes Fischgrätenmuster auf dem Pfeil 106 verdeutlicht. Im dargestellten Fall werden drei Pfeilelemente, die in Fahrtrichtung vom Fahrzeugsymbol 101 wegweisen, dargestellt. Dies signalisiert dem Fahrer des Fahrzeugs 1 eine Beschleunigung in Fahrtrichtung.

Bei dem in Figur 5B dargestellten Fall wird eine Verzögerung des Fahrzeugs 1 dargestellt, beispielsweise in der in Figur 3A dargestellten Situation des Verzögerns beim Zufahren auf eine Ampel 7. Analog zum in Figur 5A dargestellten Fall werden auch hier drei Pfeilelemente auf dem in Fahrtrichtung weisenden Pfeil 106 dargestellt, allerdings weisen die Pfeilelemente in diesem Fall gegen die Fahrtrichtung zum Fahrzeugsymbol 101 hin. Dem Fahrer des Fahrzeugs 1 wird dadurch eine Verzögerung signalisiert.

Das in Figur 5C dargestellte Beispiel einer Anzeige signalisiert eine Verzögerung des Fahrzeugs 1 bis zum Halt, beispielsweise in der in Figur 3C dargestellten Situation des Anhaltens vor einer Ampel 7. Wie bereits in Figur 5b, werden auch hier drei gegen die Fahrtrichtung weisende Pfeilelemente auf dem Pfeil 106 dargestellt, wodurch dem Fahrer eine Verzögerung signalisiert wird. Zusätzlich wird eine horizontale Linie dargestellt, die sich ebenso auf dem Pfeil 106 befindet. Die drei gegen die Fahrtrichtung weisenden Pfeilelemente weisen zu der horizontalen Linie. Dem Fahrer des Fahrzeugs 1 wird dadurch signalisiert, dass eine Verzögerung so durchgeführt wird, dass das Fahrzeug 1 zum Stillstand kommt.

In einem weiteren Ausführungsbeispiel variiert die Zahl der auf dem Pfeil 106 dargestellten Pfeilelemente je nach der Stärke der Beschleunigung bzw. der Verzögerung des Fahrzeugs 1. Insbesondere werden bei einer stärkeren Geschwindigkeitsänderung mehr Pfeilelemente angezeigt als bei einer geringeren Geschwindigkeitsänderung. Ferner kann die Größe der Pfeilelemente entsprechend angepasst werden. Zudem kann die Anzeige der Pfeilelemente dynamisch erfolgen, beispielsweise durch Erscheinen der Pfeilelemente mit zeitlicher Verzögerung, etwa nach Art eines Lauflichts, das sich auf das Fahrzeugsymbnol 101 zu oder von ihm weg bewegt. Dem Fahrer wird dadurch die Geschwindigkeitsänderung signalisiert.

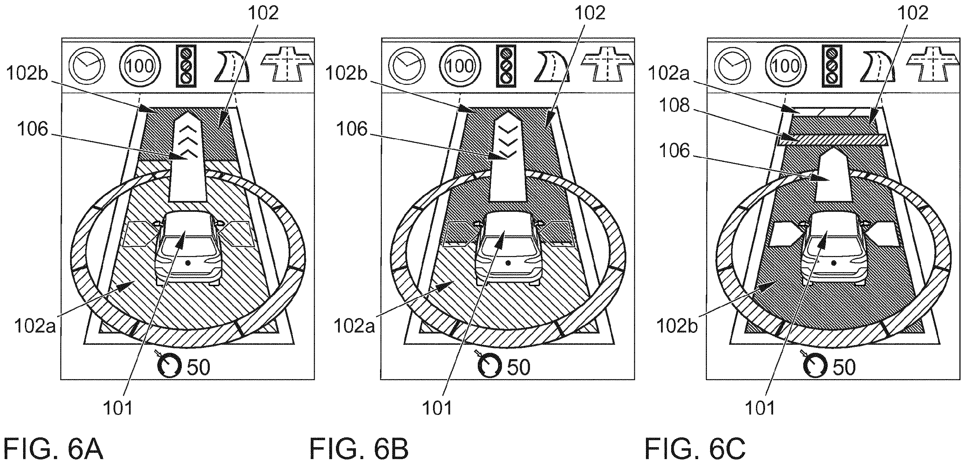

Mit Bezug zu den Figuren 6A und 6B werden Anzeigen mit unterschiedlich gefärbten Bereichen auf der virtuellen Fahrbahn 102 erläutert, die von einem Ausführungsbeispiel des erfindungsgemäßen Ampelassistenzsystems erzeugt werden. Dabei sind Farben durch Schraffuren dargestellt.

Für die Abbildung der Ampelassistenz in der Anzeige ist in den gezeigten Ausführungsbeispielen ein "Farbteppich" integriert, der dem Fahrer Informationen zur prognostizierten Ampelphase gibt. Er besteht aus den Zuständen "grün" und "rot". Möglich ist ferner die Integration der "Gelbphase". Der Farbteppich ist dynamisch und verhält sich analog zur Ampelphase bzw. dem Status der Ampel. Mit Hilfe dieser Darstellung kann der Fahrer zum einen sehen, ob er bestimmte Ampelphasen erreichen kann oder nicht, zum anderen kann er sich auf einen optimierten Ampelstart besser vorbereiten. Die Darstellung des Farbteppich ist nachfolgend im Detail beschrieben:
In Abhängigkeit von den Ampelphaseninformationen und der Geschwindigkeit v₁ und Position des Fahrzeugs 1 relativ zur Ampel 7 wird bestimmt, ob die Ampel 7 zu einem Zeitpunkt erreicht wird, zu dem eine Durchfahrt erlaubt ist oder nicht. Ferner werden die Konsequenzen einer möglichen Geschwindigkeitsänderung bestimmt. Die Anzeige wird so erzeugt, dass dem Fahrer signalisiert wird, ob er bei der aktuellen Geschwindigkeit v₁ anhalten müssen wird oder nicht. Dazu wird die virtuelle Fahrbahn 102 in Bereiche aufgeteilt, die durch verschiedene Farben voneinander abgesetzt sind. Diese Art der Anzeige wird als "Farbteppich" bezeichnet, da der Eindruck eines farblich gestalteten und/oder gemusterten Untergrundes auf der virtuellen Fahrbahn 102 entsteht.

Insbesondere wird die Farbe Grün dargestellt, wenn die Fahrt ununterbrochen fortgesetzt werden kann, und die Farbe Rot, wenn ein Anhalten erforderlich ist. Dies ist in den Zeichnungen durch verschiedene Schraffuren dargestellt. Ferner kann ein gelb gefärbter Bereich dargestellt werden, welcher einer dritten Ampelphase entspricht, insbesondere einer Übergangsphase zwischen den Phasen "Rot" und "Grün".

Bei dem in der Figur 6A dargestellten Fall kann das Fahrzeug 1 seine Fahrt bei der aktuellen Geschwindigkeit an der Ampel 7 vorbei fortsetzen, beispielsweise in der in Figur 3D dargestellten Situation des Anfahrens an einer Ampel 7. In der Darstellung befindet sich das Fahrzeugsymbol 101 daher auf dem grün gefärbten Bereich 102a der virtuellen Fahrbahn 102. Vor dem Fahrzeugsymbol 101 befindet sich der Pfeil 106, auf dem in Fahrtrichtung weisende Pfeilköpfe dargestellt sind. Dem Fahrer des Fahrzeugs 1 wird damit eine Beschleunigung signalisiert. In der Darstellung vor dem Fahrzeugsymbol 101 liegend befindet sich der rot eingefärbte Bereich 102b der virtuellen Fahrbahn 102. Dem Fahrer wird damit signalisiert, dass eine zu große Beschleunigung das Fahrzeugsymbol 101 in den roten Bereich verschieben wird und die Fahrt dann nicht ohne einen Halt an der Haltelinie 8 fortgesetzt werden darf.

Bei der in Figur 6B dargestellten Anzeige wird dem Fahrer dagegen signalisiert, dass er das Fahrzeug 1 abbremsen muss, um ein Anhalten an der Ampel 7 zu vermeiden, beispielsweise in der in den Figuren 3A und 3B dargestellten Situation der verzögerten Durchfahrt an einer Ampel 7. Das Fahrzeugsymbol 101 befindet sich in diesem Fall am Übergang zwischen dem rot eingefärbten Bereich 102b und dem grün eingefärbten Bereich 102a der virtuellen Fahrbahn 102. Eine unterbrechungsfreie Fahrt ist nur möglich, wenn die Geschwindigkeit v₁ des Fahrzeugs 1 so angepasst wird, dass sich das Fahrzeugsymbol 101 auf dem grün markierten Bereich 102a der virtuellen Fahrbahn 102 befindet. Der vor dem Fahrzeugsymbol 101 befindliche Pfeil 106 umfasst drei entgegen der Fahrtrichtung auf das Fahrzeugsymbol 101 zuweisende Pfeilköpfe, die dem Fahrer des Fahrzeugs 1 eine Verzögerung signalisieren. Dem Fahrer wird dadurch eine Geschwindigkeitsänderung signalisiert, die ein unterbrechungsfreies Vorankommen im Verkehr ermöglicht.

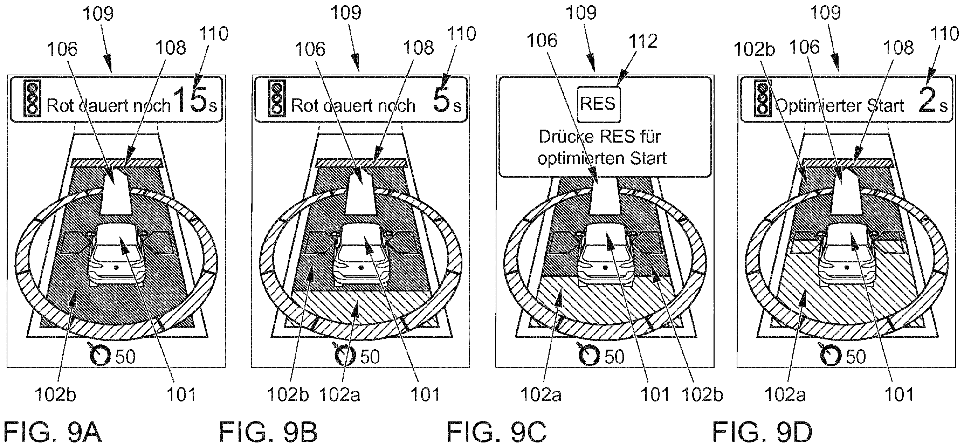

Die in der Figur 6C dargestellte Anzeige wird erzeugt, wenn ein Anhalten des Fahrzeugs an der Haltelinie 8 der Ampel 7 nicht mehr zu vermeiden ist, beispielsweise in der in den Figuren 3A und 3B dargestellten Situation vor einer roten Ampel 7. Der Bereich 102b der virtuellen Fahrbahn 102, auf dem sich das Fahrzeugsymbol 101 befindet, ist rot gefärbt. Am in Fahrtrichtung weisenden Ende des vor dem Fahrzeugsymbol 101 liegenden Pfeils 106 befindet sich das Halteliniensymbol 108. Durch die Verkürzung des Pfeils 106 gegenüber den in den Figuren 6A und 6B dargestellten Fällen wird dem Fahrer eine Verzögerung signalisiert. Zusätzlich weist das Halteliniensymbol 108 darauf hin, dass das Fahrzeug 101 zum Stillstand gebracht wird. Die Anhalteposition wird dabei so gewählt, dass ein optimierter Start des Fahrzeugs 1 durchgeführt werden kann. Der optimierte Start wird unten mit Bezug zu den Figuren 9A bis 9G im Detail beschrieben. Die Position des Halteliniensymbols 108 stellt daher nicht die Position der tatsächlichen Haltelinie 8 dar, sondern repräsentiert die gewünschte Halteposition des Fahrzeugs 1 vor der Haltelinie 8.

Die Haltelinie wird erfindungsgemäß nur angezeigt, wenn das Fahrzeug an einem voraussichtlich roten Signal anhalten muss. Bei Erreichen der Haltelinie 8 bei grünem Signal wird das Halteliniensymbol 108 nicht angezeigt. Das Halteliniensymbol 108 kann dem Fahrer darüber hinaus als Orientierungshilfe für einen möglicherweise optimierten Halt dienen, wie weiter unten näher ausgeführt ist.

In einer weiteren Ausführung umfasst die Darstellung ferner einen gelb markierten Bereich der virtuellen Fahrbahn 102. Diese stellt insbesondere den Übergang zwischen der Rotphase und der Grünphase der Ampel 7 dar.

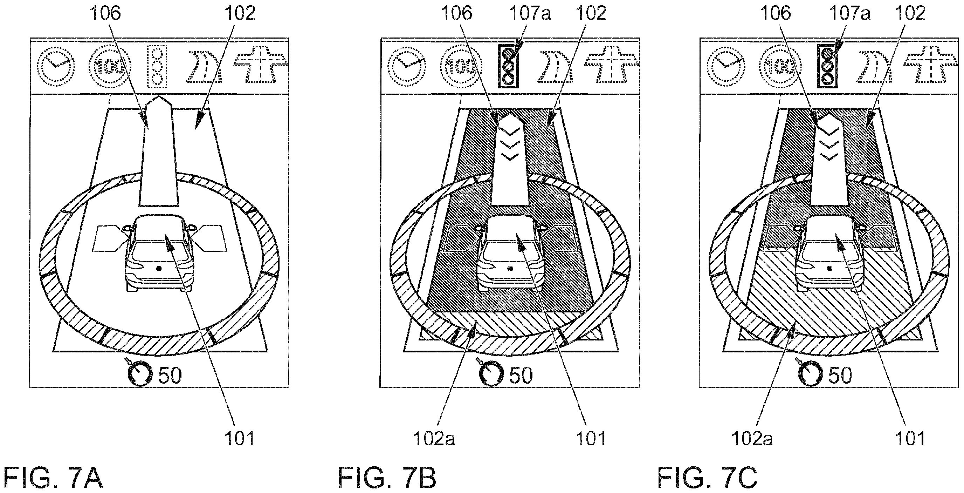

Mit Bezug zu den Figuren 7A bis 7F wird eine Abfolge von Anzeigen zur verzögerten Durchfahrt an einer Ampel erläutert, die von einem Ausführungsbeispiel des erfindungsgemäßen Ampelassistenzsystems erzeugt werden. Dies entspricht der Annäherung der Fahrzeuggeschwindigkeit v₁ an eine "grüne Welle", wobei die Ampeln 7 so konfiguriert sind, dass bei einer optimalen Geschwindigkeit mehrere Ampeln 7 ohne Halt passiert werden können. Ein Beispiel dieser Situation ist in den Figuren 3A und 3B dargestellt.

In der in Figur 7A dargestellten Ausgangssituation befindet sich das Fahrzeug 1 auf freier Strecke. Das Fahrzeugsymbol 101 wird auf der virtuellen Fahrbahn 102 dargestellt, vor dem Fahrzeug befindet sich der Pfeil 106.

Beim Übergang zu der in Figur 7B dargestellten Anzeige wurde eine in Fahrtrichtung vor dem Fahrzeug 1 befindliche Ampel detektiert und das Ampelassistenzsystem aktiviert, erkennbar am hervorgehoben dargestellten Ampelsymbol 107a. Bei der aktuellen Geschwindigkeit v₁ des Fahrzeugs 1 ist ein Anhalten an der Ampel 7 erforderlich. Das Fahrzeugsymbol 101 wird daher auf dem rot gefärbten Bereich 102b der virtuellen Fahrbahn 102 dargestellt. Der Pfeil 106 in Fahrtrichtung vor dem Fahrzeugsymbol 101 umfasst drei gegen die Fahrtrichtung weisende Pfeilelemente eines Fischgrätenmusters, die dem Fahrer eine notwendige Verzögerung des Fahrzeugs 1 signalisieren. Die Darstellung der Beschleunigung oder Verzögerung durch ein Fischgrätenmuster auf dem Pfeil 106 wurde oben bereits beschrieben. Während des Verzögerns verschiebt sich, wie in Figur 7C dargestellt, die Grenze zwischen dem rot gefärbten Bereich 102b und dem grün gefärbten Bereich 102a der virtuellen Fahrbahn 102 in Fahrtrichtung, wodurch dem Fahrer des Fahrzeugs 1 signalisiert wird, dass die durchgeführte Geschwindigkeitsänderung eine Durchfahrt an der Ampel 7 begünstigt.

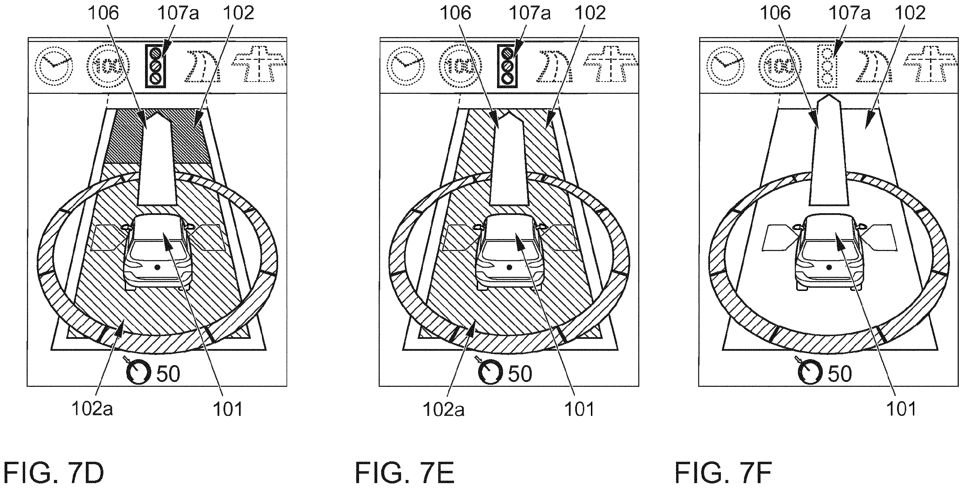

Bei der in Figur 7D dargestellten Anzeige befindet sich das Fahrzeugsymbol 101 vollständig im grün gefärbten Bereich 102a der virtuellen Fahrbahn 102. Dem Fahrer wird damit signalisiert, dass bei der aktuellen Geschwindigkeit v₁ ein Durchfahren an der Ampel 7 ohne Halt möglich ist. Nach dem Überfahren der Haltelinie 8, bei freier Fahrt für das Fahrzeug 1, wird, wie in Figur 7E dargestellt, die gesamte virtuelle Fahrbahn 102 grün eingefärbt. Dies signalisiert dem Fahrer freie Fahrt. Da sich das Fahrzeug 1 nicht in der Nähe einer weiteren Ampel 7 befindet, wird der Ampelassistent inaktiv und das zugeordnete Ampelsymbol 107a wird ausgeblendet. Die virtuelle Fahrbahn 102 wird nicht mehr farblich markiert dargestellt, wie in Figur 7F gezeigt.

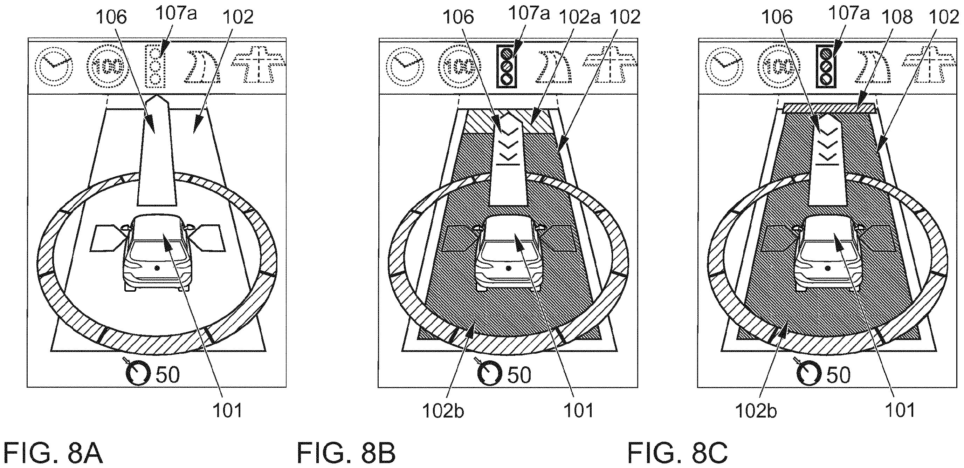

Mit Bezug zu den Figuren 8A bis 8E wird eine Abfolge von Anzeigen zum Halt vor einer Ampel erläutert, die von einem Ausführungsbeispiel des erfindungsgemäßen Ampelassistenzsystems erzeugt werden.

Die in der Figur 8A dargestellte Anzeige wird dem Fahrer des Fahrzeugs 1 angezeigt, wenn sich keine Ampel 7 in der Nähe vor dem Fahrzeug 1 befindet. Das Fahrzeugsymbol 101 befindet sich auf der virtuellen Fahrbahn 102, ferner ist ein vor dem Fahrzeug befindlicher in Fahrtrichtung weisender Pfeil 106 dargestellt. Das Ampelsymbol 107a ist grau dargestellt, was ein inaktives Ampelassistenzsystem signalisiert.

Wird eine vor dem Fahrzeug 1 befindliche Ampel 7 detektiert, an der die Durchfahrt verboten ist und an der ein Halt des Fahrzeugs 1 unvermeidlich ist, so wird die in Figur 8B gezeigte Anzeige dargestellt. Das Ampelassistenzsystem wird aktiv und das Ampelsymbol 107a farbig hervorgehoben dargestellt. Die virtuelle Fahrbahn 102 umfasst in diesem Fall einen rot markierten Bereich 102b, auf dem sich das Fahrzeugsymbol 101 befindet. Perspektivisch in Fahrtrichtung vor dem Fahrzeugsymbol 101 befindet sich ein grün markierter Bereich 102a, dessen großer Abstand vom Fahrzeugsymbol 101 dem Fahrer signalisiert, dass eine Durchfahrt nur bei deutlich höherer Geschwindigkeit möglich wäre. Gleichzeitig umfasst der vor dem Fahrzeug in Fahrtrichtung angezeigte Pfeil 106 drei gegen die Fahrtrichtung weisende Pfeilelemente sowie eine horizontale Linie, auf die die Pfeilelemente gerichtet sind. Dies signalisiert dem Fahrer des Fahrzeugs 1, dass eine Bremsung bis zum Stillstand des Fahrzeugs 1 durchgeführt werden muss.

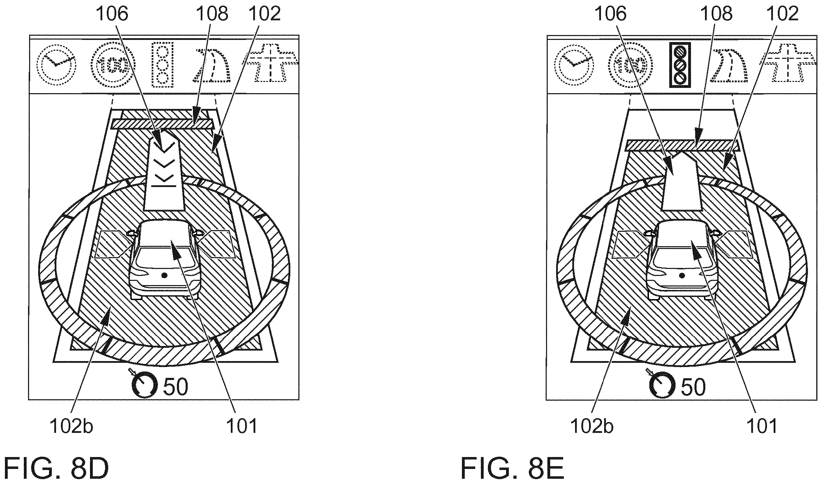

Bei weiterer Annäherung an die Ampel 7 wird die in Figur 8C dargestellte Anzeige angezeigt. Am Ende des vor dem Fahrzeugsymbol 101 befindlichen Pfeils 106 wird nun zusätzlich das Halteliniensymbol 108 dargestellt. Wie in Figur 8D dargestellt, rückt dieses Halteliniensymbol 108 bei weiterer Annäherung näher auf das Fahrzeugsymbol 101 zu, wobei gleichzeitig der Pfeil 106 verkürzt wird.

Beim Halt im optimalen Abstand zur Haltelinie 8 wird, wie in Figur 8E dargestellt, das Halteliniensymbol 108 am Ende des vom Fahrzeug 1 in Fahrtrichtung wegweisenden Pfeils 106 dargestellt. In diesem Fall umfasst der Pfeil 106 keine weiteren Pfeilköpfe mehr, da das Fahrzeug 1 bereits zum Stillstand gekommen ist.

Mit Bezug zu den Figuren 9A bis 9G wird eine Abfolge von Anzeigen bei der Durchführung eines optimierten Startvorgangs nach dem Halt an einer Ampel erläutert, die von einem Ausführungsbeispiel des erfindungsgemäßen Ampelassistenzsystems erzeugt werden.

Die dargestellten Anzeigen werden angezeigt, nachdem das Fahrzeug 1 an einer roten Ampel 7 anhalten musste. Das Fahrzeugsymbol 101 befindet sich auf der virtuellen Fahrbahn 102. Vor dem Fahrzeugsymbol 101 wird das Pfeilsymbol 106 angezeigt, das in Fahrtrichtung vom Fahrzeug 101 wegweist und an dem Halteliniensymbol 108 endet. Im oberen Bereich der Anzeige öffnet sich ein Meldungsfenster 109. Eine Meldung zeigt dem Fahrer an, wie lange die Rotphase noch andauern wird. Insbesondere zeigt ein Zähler 110 bei der in Figur 9A dargestellten Anzeige an, dass die Ampel 7 in 15 Sekunden auf Grün umschalten wird. Das Fahrzeugsymbol 101 befindet sich daher im rot eingefärbten Bereich 102b der virtuellen Fahrbahn 102, wodurch dem Fahrer signalisiert wird, dass keine Beschleunigung durchgeführt werden soll.

Figur 9B zeigt die Anzeige zehn Sekunden später und die Anzeige signalisiert, dass in fünf Sekunden die Umschaltung der Ampel 7 erfolgen wird. Auf der virtuellen Fahrbahn 102 hinter dem Fahrzeugsymbol 101 erscheint ein grün gefärbter Bereich 102a, der sich mit ablaufender Wartezeit in Fahrtrichtung nach vorne bewegt und dem Fahrer signalisiert, dass bald ein Start durchgeführt werden kann.

Figur 9C zeigt die Anzeige kurz vor dem Umschalten der Ampel 7 auf Grün. Im Meldungsfenster 109 wird dabei eine Bestätigungsaufforderung angezeigt, welche eine Schaltfläche 112 umfasst. Bevor das Fahrzeug 101 einen optimierten Start durchführt, muss der Fahrer dieses Fahrmanöver manuell bestätigen. Im dargestellten Fall erfolgt dies durch Berühren der auf der Anzeige dargestellten Schaltfläche 112, deren Berührung durch den Fahrer mittels einer berührungsempfindlichen Oberfläche der Anzeigeeinrichtung 6 registriert wird. Alternativ kann die Bestätigung durch das Betätigen eines Knopfes an der Mittelkonsole des Fahrzeugs 1 durchgeführt werden.

Nachdem der Fahrer die Durchführung des optimierten Starts bestätigt hat, wird, wie in Figur 9D gezeigt, im Meldungsfenster 109 durch den Zähler 110 die Zeit bis zur Durchführung des optimierten Starts angezeigt, im dargestellten Fall zwei Sekunden. Während sich der Zeitpunkt zum Losfahren des Fahrzeugs 1 nähert, verschiebt sich der Übergang vom rot gefärbten Bereich 102b zum grün gefärbten Bereich 102a der virtuellen Fahrbahn 102 weiter in Fahrtrichtung zur Haltelinie 108 hin. Dem Fahrer wird damit signalisiert, wann der Start des Fahrzeugs 1 durchgeführt wird.

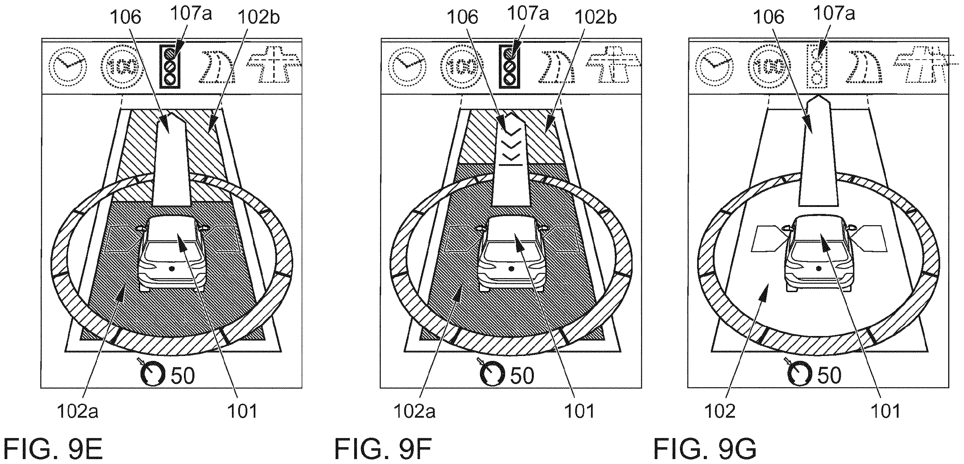

Nach Ablauf der Wartezeit wird der optimierte Start durchgeführt. Die entsprechende Anzeige ist in Figur 9E gezeigt. Das Halteliniensymbol 108 wird ausgeblendet, da das Fahrzeug 1 nun nicht mehr stehen soll. Ferner befindet sich das Fahrzeugsymbol 101 vollständig im grün markierten Bereich 102a der virtuellen Fahrbahn 102 und der vor dem Fahrzeugsymbol 101 dargestellte Pfeil 106 ist gegenüber der Darstellung in Figur 9D verlängert. Dem Fahrer wird damit signalisiert, dass eine Beschleunigung ausgeführt wird.

Durch das in Figur 9F dargestellte Fischgrätenmuster auf dem Pfeil 106 mit in Fahrtrichtung weisenden Pfeilelementen wird eine weitere Beschleunigung signalisiert. Das Fahrzeug 1 beschleunigt und fährt auf die Haltelinie 8 zu, während die Ampel noch auf Rot steht.

Die Bewegung des Fahrzeugs 1 wird so gesteuert, dass es die Haltelinie 8 in dem Moment überfährt, in dem die Ampel 7 auf Grün schaltet und die Fahrt damit freigibt. Damit befindet sich vor dem Fahrzeug 1 keine Ampel 7 mehr und das Ampelassistenzsystem wird inaktiv, wie in Figur 9G durch das ausgegraute Ampelsymbol 107a dargestellt.

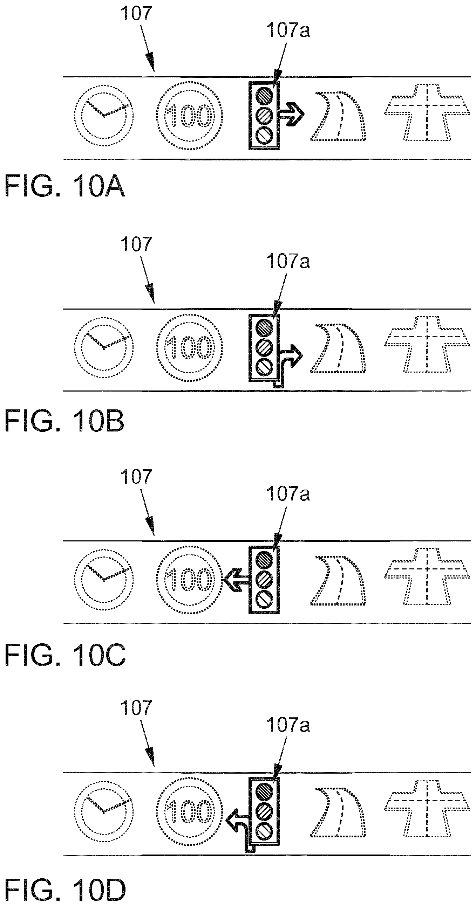

Mit Bezug zu den Figuren 10A bis 10F werden Anzeigen zur Zuordnung mehrerer Fahrstreifen und Ampeln erläutert, die von einem Ausführungsbeispiel des erfindungsgemäßen Ampelassistenzsystems erzeugt werden.

Die Figuren 10A bis 10D zeigen Beispiele für die symbolische Darstellung von Regelobjekten 107, wobei das Ampelassistenzsystem für eine bestimmte Ampel 7 aus einer größeren Anzahl Ampeln 7 aktiv ist. Insbesondere bezieht sich die Darstellung auf eine Ampel 7, die einer Abbiegespur zugeordnet ist. Bei den Regelobjekten 107 wird auch ein Ampelsymbol 107a dargestellt, das in den gezeigten Fällen einen Pfeil nach rechts oder links umfasst. Im in Figur 10A dargestellten Fall umfasst das Ampelsymbol 107a einen Pfeil nach rechts, während der Pfeil in Figur 10B nach rechts abknickend dargestellt ist. Umgekehrt umfasst das Ampelsymbol 107a in Figur 10C einen nach links weisenden Pfeil, der in Figur 10D als nach links abknickend dargestellt ist. Dem Fahrer wird damit signalisiert, dass sich die Anzeige des Ampelassistenzsystems auf diejenige Ampel 7 bezieht, die der Fahrspur für die jeweilige Abbiegerichtung zugeordnet ist.

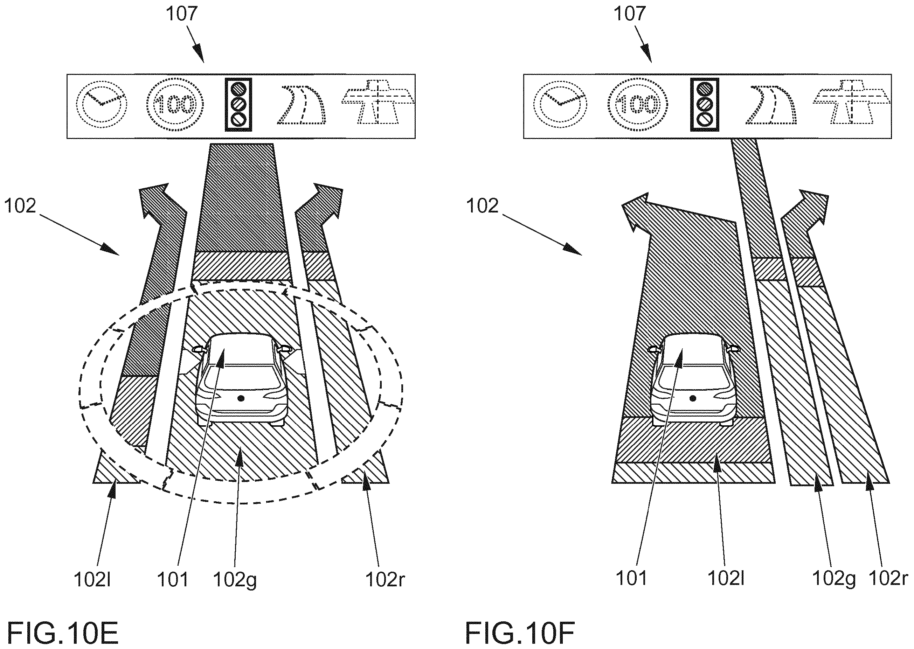

Die Figuren 10E und 10F zeigen Darstellungen, bei denen die Wahl der Fahrspur dadurch angezeigt wird, dass sich das Fahrzeugsymbol 101 auf einer in diesem Fall dreigeteilten virtuellen Fahrbahn 102 befindet, wobei eine linke Spur 102l, eine Geradeausspur 102g sowie eine Rechtsabbiegespur 102r dargestellt sind. Die Abbiegespuren nach links 102l und nach rechts 102r sind als abknickende Pfeile in die jeweilige Richtung dargestellt. Das Fahrzeugsymbol 101 befindet sich jeweils auf der Fahrspur 102l, 102g oder 102r, auf der sich auch das reale Fahrzeug 1 befindet. Der oben bereits beschriebene Farbteppich, bei dem die Fahrbahn 102 rot bzw. grün eingefärbt ist, wird hier für jede der einzelnen Fahrspuren 102g, 102l und 102r dargestellt. Der Fahrer kann somit leicht erkennen, auf welcher Fahrspur mit welcher Ampelphase zu rechnen ist.

In der in Figur 10E dargestellten Situation befindet sich das Fahrzeugsymbol 101 auf der Geradeausspur 102g. Das Fahrzeug befindet sich im grün eingefärbten Bereich des Fahrstreifens 102g, wodurch dem Fahrer des Fahrzeugs 1 signalisiert wird, dass er die Ampel 7 vor dem Fahrzeug in gerader Richtung überfahren kann.

In der in Figur 10F dargestellten Situation befindet sich das Fahrzeugsymbol 101 auf der linken Fahrspur 102l und ist hier im rot eingefärbten Bereich der Fahrspur 102l. Dem Fahrer des Fahrzeugs 1 wird dadurch signalisiert, dass das Fahrzeug vor der Haltelinie 8 an der Ampel 7 zum Stillstand gebracht werden muss.

In einem weiteren Ausführungsbeispiel sind die beiden oben beschriebenen Möglichkeiten zur Markierung der relevanten Fahrspur kombiniert, d.h. es wird sowohl ein Ampelsymbol 107a mit einem Pfeil in die entsprechende Richtung angezeigt als auch mehrere Fahrspuren, wobei sich das Fahrzeugsymbol 101 auf der jeweils relevanten Fahrspur 102g, 102l oder 102r befindet. Die Zahl und Gestaltung der einzelnen Fahrstreifen ist dabei abhängig von der Anordnung der Fahrstreifen auf der realen Fahrbahn 2.

In einem weiteren Ausführungsbeispiel zeigt die Anzeige dem Fahrer Fahranweisungen an, die dieser dann aktiv durch Eingriffe in die Steuerung des Fahrzeugs 1 umsetzen soll. Dies ist insbesondere dann der Fall, wenn das Längsregelsystem 4b nicht aktiv ist oder ein Fahrzeug 1 nicht über ein solches System verfügt. Die Ampelassistenzeinrichtung 4a erzeugt in diesem Fall eine Fahranweisung und die Steuereinrichtung 3 erzeugt eine entsprechende Anzeige auf der Anzeigeeinrichtung 6.

### Bezugszeichenliste

- 1: Fahrzeug
- 2: Fahrstreifen
- 3: Steuereinrichtung
- 4a: Ampelassistenzeinrichtung
- 4b: Längsregelsystem
- 5: Funkschnittstelle; Kommunikationseinrichtung
- 6: Anzeigeeinrichtung; Kombiinstrument
- 7: Ampel
- 8: Haltelinie
- 9: Antriebseinheit
- 10: Erfassungseinheit
- 101: Fahrzeugsymbol
- 102: Fahrbahn (Symbol)
- 102a: grün markierte Fahrbahn (Symbol)
- 102b: rot markierte Fahrbahn (Symbol)
- 102g: Fahrspur geradeaus
- 102l: Fahrspur links
- 102r: Fahrspur rechts
- 103: Warnring
- 104: Soll-Geschwindigkeit
- 105: Querführungsanzeige
- 106: Anzeigeelement; Pfeil
- 107: Regelobjekte
- 107a: Ampelsymbol
- 108: Halteliniensymbol
- 109: Meldungsfenster
- 110: Zähler
- 112: Schaltfläche
- F: Fahrtrichtung
- D: Abstand
- V₁: Geschwindigkeit

## Patentansprüche

1. Ampelassistenzsystem für ein Fahrzeug (1) mit einer Anzeigeeinrichtung (6) für den Fahrer des Fahrzeugs (1) und einer Steuereinrichtung (3), die ausgebildet ist, in Abhängigkeit von Ampelphaseninformationen und Fahrzeuginformationen zumindest ein Anzeigeelement (106) zu erzeugen und das Anzeigeelement (106) relativ zu einem Fahrzeugsymbol (101) auf der Anzeigeeinrichtung (6) darzustellen, wobei die Steuereinrichtung (3) ausgebildet ist eine entsprechende Anzeige auf der Anzeigeeinrichtung (6) zu erzeugen und wobei das Fahrzeugsymbol (101) als Referenzpunkt innerhalb der Anzeige dient, **dadurch gekennzeichnet, dass** das Anzeigeelement (106) als Pfeil (106) variabler Länge ausgestaltet und in Fahrtrichtung (F) vor dem Fahrzeugsymbol (101) angeordnet ist sowie dass die Länge des Pfeils (106) abhängig ist von dem Betrag und/oder der Richtung der Beschleunigung oder Verzögerung des Fahrzeugs (1).

2. Ampelassistenzsystem nach Anspruch 1, **dadurch gekennzeichnet, dass** die Ampelphaseninformationen über eine Funkschnittstelle (5) empfangbar und/oder aus einer Datenbank lesbar sind.

3. Ampelassistenzsystem nach Anspruch 1 oder 2, **dadurch gekennzeichnet, dass** die Fahrzeuginformationen einen Abstand zwischen dem Fahrzeug (1) und der nächsten Ampel (7) in Fahrtrichtung, eine Fahrzeugbeschleunigung und/oder eine Annäherungsgeschwindigkeit des Fahrzeugs (1) an die Ampel (7) umfassen.

4. Ampelassistenzsystem nach einem der Ansprüche 1 bis 3, **dadurch gekennzeichnet, dass** die Fahrzeuginformationen Regelparameter eines Längsregelsystems (4b) umfassen und die Regelparameter in Abhängigkeit von den Ampelphaseninformationen gebildet sind.

5. Ampelassistenzsystem nach Anspruch 4, **dadurch gekennzeichnet, dass** das Längsregelsystem (4b) ausgebildet ist, Regelparameter zur Beschleunigung oder Verzögerung des Fahrzeugs (1) so zu erzeugen, dass die Bewegung des Fahrzeugs (1) vor einer Ampel (7) in Bezug auf die Fahreffizienz optimiert wird.

6. Ampelassistenzsystem nach einem der vorhergehenden Ansprüche, **dadurch gekennzeichnet, dass** der Pfeil (106) ein Fischgrätenmuster umfasst, das abhängig davon gestaltet ist, ob ein aktiviertes Längsregelsystem (4b) das Fahrzeug (1) beschleunigt, verzögert oder bis zum Stillstand verzögert und/oder ob das Fahrzeug (1) bis zum Erreichen der nächsten Ampel (7) in Fahrtrichtung (F) beschleunigen, verzögern oder bis zum Stillstand vor der Ampel (7) verzögern wird.

7. Ampelassistenzsystem nach einem der vorhergehenden Ansprüche, **dadurch gekennzeichnet, dass** die Steuereinrichtung (3) ausgebildet ist, mehrere Anzeigeelemente (102g; 102l; 102r) relativ zu dem Fahrzeugsymbol (101) auf der Anzeigeeinrichtung (6) darzustellen, wobei die verschiedenen Anzeigeelemente unterschiedlichen Fahrstreifen (2) und/oder unterschiedlichen Ampeln (7) zugeordnet sind.

8. Ampelassistenzsystem nach einem der vorhergehenden Ansprüche, **dadurch gekennzeichnet, dass** die Steuereinrichtung (3) ausgebildet ist, ferner ein Halteliniensymbol (108) relativ zu dem Fahrzeugsymbol (101) auf der Anzeigeeinrichtung (6) darzustellen.

## Claims

1. Traffic light assistance system for a vehicle (1) having a display device (6) for the driver of the vehicle (1) and a control device (3), the latter being embodied for generating at least one display element (106) in dependence on traffic light phase information and vehicle information and for presenting the display element (106) relative to a vehicle symbol (101) on the display device (6), wherein the control device (3) is embodied to generate a corresponding display on the display device (6) and wherein the vehicle symbol (101) serves as a reference point within the display, **characterized in that** the display element (106) takes the form of an arrow (106) of variable length and is arranged in front of the vehicle symbol (101) in the driving direction (F), and **in that** the length of the arrow (106) is dependent on the magnitude and/or the direction of the acceleration or deceleration of the vehicle (1).

2. Traffic light assistance system according to Claim 1, **characterized in that** the traffic light phase information is receivable via a radio interface (5) and/or is readable from a database.

3. Traffic light assistance system according to Claim 1 or 2, **characterized in that** the vehicle information comprises a distance between the vehicle (1) and the nearest traffic light (7) in the driving direction, a vehicle acceleration and/or an approach speed of the vehicle (1) towards the traffic light (7).

4. Traffic light assistance system according to one of Claims 1 to 3, **characterized in that** the vehicle information comprises regulating parameters of a length regulation system (4b) and the regulating parameters are formed in dependence on the traffic light phase information.

5. Traffic light assistance system according to Claim 4, **characterized in that** the length regulation system (4b) is embodied for generating regulating parameters for the acceleration or deceleration of the vehicle (1) in a manner such that the movement of the vehicle (1) in front of a traffic light (7) is optimized with respect to the driving efficiency.

6. Traffic light assistance system according to one of the preceding claims, **characterized in that** the arrow (106) comprises a herringbone pattern, which is designed depending on whether an activated length regulation system (4b) accelerates or decelerates the vehicle (1) or decelerates it to a stop and/or whether the vehicle (1) will accelerate or decelerate until the nearest traffic light (7) in the driving direction (F) has been reached or will decelerate to a stop in front of the traffic light (7).

7. Traffic light assistance system according to one of the preceding claims, **characterized in that** the control device (3) is embodied for presenting a plurality of display elements (102g; 1021; 102r) relative to the vehicle symbol (101) on the display device (6), wherein the different display elements are assigned to different lanes (2) and/or different traffic lights (7).

8. Traffic light assistance system according to one of the preceding claims, **characterized in that** the control device (3) is embodied for furthermore presenting a stop line symbol (108) relative to the vehicle symbol (101) on the display device (6).

## Revendications

1. Système d'assistance aux feux de signalisation destiné à un véhicule (1) et comprenant un dispositif d'affichage (6) destiné au conducteur du véhicule (1) et un dispositif de commande (3) qui est conçu pour générer au moins un élément d'affichage (106) en fonction d'informations de phase de feux de signalisation et d'informations de véhicule et pour présenter l'élément d'affichage (106) par rapport à un symbole de véhicule (101) sur le dispositif d'affichage (6), le dispositif de commande (3) étant conçu pour générer un affichage correspondant sur le dispositif d'affichage (6) et le symbole de véhicule (101) servant de point de référence dans l'affichage, **caractérisé en ce que** l'élément d'affichage (106) est conçu comme une flèche (106) de longueur variable et est disposé devant le symbole du véhicule (101) dans le sens de déplacement (F) et **en ce que** la longueur de la flèche (106) dépend de la quantité et/ou de la direction de l'accélération ou de la décélération du véhicule (1).

2. Système d'assistance aux feux de signalisation selon la revendication 1, **caractérisé en ce que** les informations de phase de feux de signalisation peuvent être reçues par le biais d'une interface radio (5) et/ou peuvent être lues dans une base de données.

3. Système d'assistance aux feux de signalisation selon la revendication 1 ou 2, **caractérisé en ce que** les informations de véhicule comprennent une distance entre le véhicule (1) et le feu de signalisation suivant (7) dans le sens de déplacement, une accélération de véhicule et/ou une vitesse d'approche du véhicule (1) par rapport aux feux de signalisation (7).

4. Système d'assistance aux feux de signalisation selon l'une des revendications 1 à 3, **caractérisé en ce que** les informations de véhicule comprennent des paramètres de régulation d'un système de régulation longitudinale (4b) et les paramètres de commande sont formés en fonction des informations de phase de feux de signalisation.

5. Système d'assistance aux feux de signalisation selon la revendication 4, **caractérisé en ce que** le système de régulation longitudinale (4b) est conçu pour générer des paramètres de régulation d'accélération ou de décélération du véhicule (1) de façon à optimiser le déplacement du véhicule (1) devant un feu de signalisation (7) en termes d'efficacité de conduite.

6. Système d'assistance aux feux de signalisation selon l'une des revendications précédentes, **caractérisé en ce que** la flèche (106) comprend un motif à chevrons dont la conception dépend du fait qu'un système de régulation longitudinale activé (4b) accélère le véhicule (1), le décélère ou le décélère jusqu'à l'arrêt et/ou que le véhicule (1) accélérera ou décélérera jusqu'à atteindre le prochain feu (7) dans le sens de déplacement (F) ou décélérera jusqu'à l'arrêt devant le feu de signalisation (7) .

7. Système d'assistance aux feux de circulation selon l'une des revendications précédentes, **caractérisé en ce que** le dispositif de commande (3) est conçu pour présenter une pluralité d'éléments d'affichage (102g ; 102l ; 102r) par rapport au symbole de véhicule (101) sur le dispositif d'affichage (6), les différents éléments d'affichage étant associés à différentes voies de circulation (2) et/ou différents feux de signalisation (7) .

8. Système d'assistance aux feux de signalisation selon l'une des revendications précédentes, **caractérisé en ce que** le dispositif de commande (3) est conçu pour présenter également un symbole de ligne d'arrêt (108) par rapport au symbole de véhicule (101) sur le dispositif d'affichage (6).
